# EUROPEAN PATENT APPLICATION

(11) **EP 2 309 393 A1**
(43) Date of publication of application: **13.04.2011**
(21) Application number: 10177646.6
(22) Date of filing: 20.09.2010
(51) Int. Cl.: G06F 12/08

(54) **Cache memory control device, cache memory device, processor, and controlling method for storage device**

(30) Priority: 06.10.2009 JP 2009232747
(71) Applicant: FUJITSU LIMITED, Kawasaki-shi, Kanagawa 211-8588 (JP)
(72) Inventor: Doi, Masanori, Kawasaki-shi Kanagawa 211-8588 (JP)
(74) Representative: Stebbing, Timothy Charles

(57) **Abstract**

A cache memory control device for controlling includes: a clock control unit that controls a clock supply unit among a plurality of clock supply units for supplying clocks to the plurality of cache memories to disable supplying of a clock to cache memories other than a first cache memory when an instruction control unit requests second data stored continuously with first data in the first cache memory.

## Description

### FIELD

The embodiments discussed herein are related to a cache memory control device, a cache memory device, a processor, and a cache memory controlling method for a storage device.

### BACKGROUND

Computers capable of providing a number of functions depending on the uses in various fields have become widespread. Generally in a computer network, a computer which provides a necessary service at a request of a client is called a server.

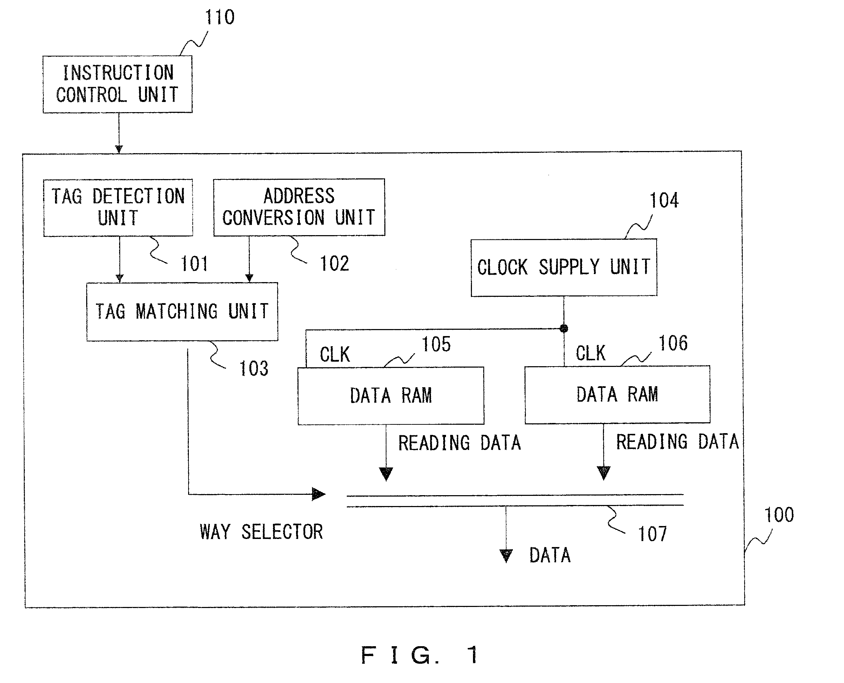

FIG. 1 is an explanatory view of controlling the RAM (random access memory) used in L1 cache memory (level-1 cache memory) implemented in the CPU (central processing unit) as a processor loaded into a server.

When an instruction fetch request is received from an instruction control unit 110 for executing a program instruction by controlling the CPU, a TAG detection unit 101 in an L1 cache unit 100 refers to a TAG table, and retrieves a physical address corresponding to an index included in an instruction address. The physical address corresponding to the index is called a TAG. Simultaneously, an address conversion unit 102 refers to a TLB (translation lookaside buffer), and converts a virtual address (instruction address) into a physical address.

Then, a TAG matching unit 103 compares the TAG output by the TAG detection unit 101 with the physical address output by the address conversion unit 102

When the addresses match each other, it is determined that TAG matching has been achieved, and a MAY selector 107 selects the data RAM in which the TAG matching has been achieved. The L1 cache unit 100 outputs the selected data to the instruction control unit 110.

When no TAG matching is achieved, the process of requesting an L2 cache unit for data is started. After the process, the TAG detection unit 101 searches the TAG table again. Then, the TAG matching unit 103 compares the TAG output by the TAG detection unit 102 with the physical address output by the address conversion unit 102.

Thus, a TAG is retrieved and simultaneously data is read from plural units of data RAM. During the operation, a clock supply unit 104 continuously supplies a clock to data RAM 105 and 106.

Relating to the above-mentioned technology, when the operation is performed at an acceptable operation speed, it is well known that cache memory is used to reduce power consumption for access to wasteful missways by activating hit data memory only.

In addition, it is also well known that a data processing device is used to suppress the memory operation of an address array and operate only a data array when the first signal indicates the address at which access is continuously achieved and flag means is in the first state when the CPU performs the access.

It is also well known that an access request to second cache is accepted and inoperable RAM in the RAM units each configured by a plurality of blocks is determined according to the types of access requests and the information about addresses.
[Patent Document 1] Japanese Laid-open Patent Publication No. 09-223068
[Patent Document 2] Japanese Laid-open Patent Publication No. 11-184752
[Patent Document 3] Japanese Laid-open Patent Publication No. 2006-040089

### SUMMARY

The L1 cache unit 100 illustrated in FIG. 1 may continuously read data of, for example, 32 bytes from a lower order address in the same line of the data RAM in which TAG matching is achieved at a request from the instruction control unit 110. In this case, the data of the data RAM in which no TAG matching is achieved is not used. However, since a clock is constantly applied to all units of data RAM, wasteful power is consumed by operations.

Accordingly, it is an object in one aspect of the embodiments to suppress the wasteful power consumption by the supply of clocks to instruction data RAM.

According to an aspect of embodiments, a cache memory control device for controlling a storage device that stores data at a request of an instruction control unit for executing an instruction on the data, the cache memory control device includes the following components.

A cache memory designation unit designates a first cache memory storing first data requested by the instruction control unit in a plurality of cache memories included in a storage unit holding the data and a clock is separately provided, respectively.

A data output unit reads the first data from the first cache memory designated by the cache memory designation unit, and outputs the first data.

A clock control unit controls a clock supply unit among a plurality of clock supply units for supplying clocks to the plurality of cache memories to disable supplying of a clock to cache memories other than the first cache memory when the instruction control unit requests second data stored continuously with the first data in the first cache memory.

### BRIEF DESCRIPTION OF DRAWINGS

FIG. 1 is an explanatory view of controlling data. RAM used for L1 cache memory implemented in the CPU loaded into a server;
FIG. 2 is an example of a configuration of a processor in which a control device according to a first embodiment is used for a data storage device;
FIG. 3 is an example of a configuration of a processor using a cache memory control device according to a second embodiment;
FIG. 4 is an example of a concrete configuration of an important portion of a processor according to the second embodiment;
FIG. 5 is an example of a concrete configuration of a TAG (MAY0) matching detection unit according to the second embodiment;
FIG. 6 is an example of a configuration of a RAM clock control unit and data RAM according to the second embodiment;
FIG. 7 is an explanatory view of the outline of the operation of the instruction control unit according to the second embodiment;
FIG. 8 is a flowchart of the determining process of sequence access in the instruction control unit according to the second embodiment;
FIG. 9 is a flowchart of clock control of data RAM in the TAG matching unit according to the second embodiment;
FIG. 10 is an explanatory view of the pipeline processing of an instruction fetch according to the second embodiment;
FIG. 11 is an explanatory view of practical pipeline processing of an instruction fetch according to the second embodiment;
FIG. 12 is an explanatory view of practical pipeline processing of an instruction fetch according to the second embodiment;
FIG. 13 is an example of a variation of the processor according to the second embodiment; and
FIG. 14 is an example of a practical configuration of the important part of the RAM clock control unit in an example of a variation, of the processor according to the second embodiment.

### DESCRIPTION OF EMBODIMENTS

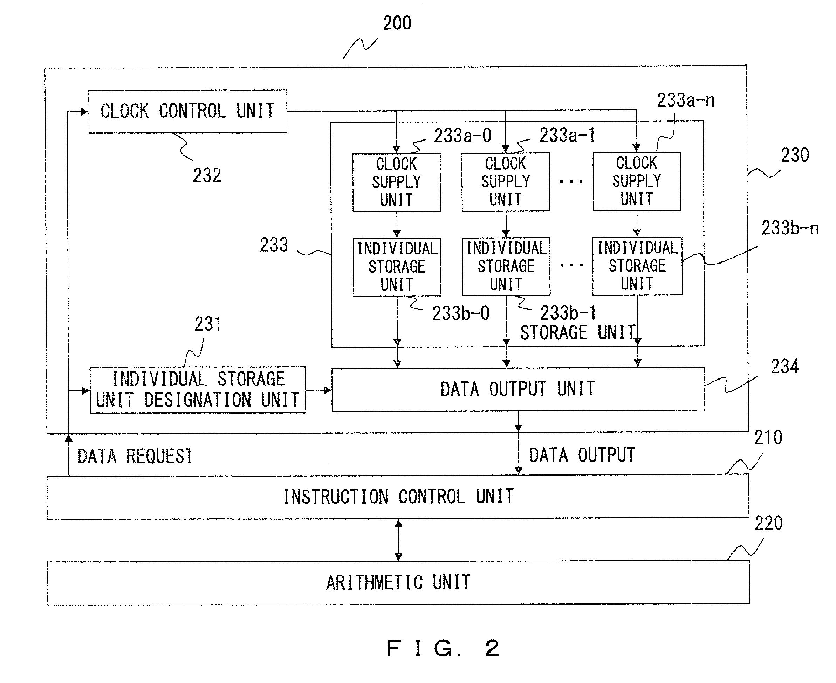

The present embodiment is described below with reference to FIGS. 2 through 13.

FIG. 2 is an example of a configuration of a processor 200 in which a control device according to the present embodiment is used for a data storage device 230.

The processor 200 illustrated in FIG. 2 includes an instruction control unit 210, an arithmetic unit 220, and a data storage unit 230.

The instruction control unit 210 reads a predetermined program instruction from non-volatile memory etc. not illustrated in the attached drawings, but connected to the data storage unit 230 and another processor 200, and executes the program instruction by allowing the arithmetic unit 220 to perform an arithmetic operation etc. as necessary.

The arithmetic unit 220 performs an arithmetic operation requested by the instruction control unit 210.

The data storage unit 230 includes an individual storage unit designation unit 231, a clock control unit 232, a storage unit 233, and a data output unit 234. The control device according to the present embodiment may be realized by a configuration including, for example, the individual storage unit designation unit 231, the clock control unit 232, and the data output unit 234.

The individual storage unit designation unit 231 designates an individual storage unit storing data requested by the instruction control unit 210 in individual storage units 233b-0, 233b-1, ... and 233b-n of the storage unit 233 described later. The character n is a natural number of 1 or more. An arbitrary individual storage unit in the individual storage units 233b-0, 233b-1, ... and 233b-n is simply referred to as an "individual storage unit".

The clock control unit 232 detects that second data stored continuously with the first data in the individual storage unit storing the first data has been requested after the first data by the instruction control unit 210.

Hereinafter, requesting after the first data from the instruction control unit 210 the second data stored continuously with the first data in the individual storage unit storing the first data is referred to as "sequential access". In this case, the individual storage unit storing the first data is referred to as a "first individual storage unit".

Also requesting after the second data the third data stored continuously with the second data in the first individual storage unit is referred to as the "sequential access".

When the sequential access is detected, the clock control unit 232 instructs the clock supply units 233a-0, 233a-1, ... and 233a-n to stop the supply of a clock to the individual storage units other than the first individual storage unit. The arbitrary clock supply unit in the clock supply units 233a-0, 233a-1, ... and 233a-n is referred to simply as a "clock supply unit". Whether the data request from the instruction control unit 210 is sequential access may be detected by the clock control unit 232 according to the notification of a result of the determination by the instruction control unit 210, or may be determined and detected by the clock control unit 232 itself.

The storage unit 233 includes clock supply units 233a-0, 233a-1, ... and 233a-n for supplying clocks to individual storage units and individual storage units 233b-0, 233b-1, ... and 233b-n storing data.

Each of the clock supply units 233a-0, 233a-1, and ... 233a-n supplies a clock to the individual storage units 233b-0, 233b-1, ... and 233b-n at an instruction from the clock control unit 232.

Each of the clock supply units 233a-0, 233a-1, ... and 233a-n may supply a clock generated by each unit to an individual storage unit, or may supply to an individual storage unit a clock provided from a clock generation, circuit not illustrated in the attached drawings.

The individual storage units 233b-0, 233b-1, ... and 233b-n are, for example, non-volatile memory storing data. Memory having n WAYs may be realized by each of the individual storage units 233b-0, 233b-1, ... and 233b-n configuring one MAY. The individual storage units 233b-0, 233b-1, ... and 233b-n operate at the clocks supplied by the clock supply unit, and outputs specified data to the data output unit 234.

The data output unit 234 acquires the data output by the individual storage unit designated by the individual storage unit designation unit 231, and outputs the data to the instruction control unit 210.

With the configuration above, the clock control unit 232 detects the sequential access. Then, the clock control unit 232 instructs the clock supply units 233a-0, 233a-1, ... and 233a-n to stop the supply of clocks to the individual storage units other than the first individual storage unit designated by the individual storage unit designation unit 231.

As a result, while the sequential access is performed, the supply of clocks to all individual storage units other than the first individual storage unit is stopped, and the wasteful operation of the storage unit 233 may be suppressed, thereby reducing the power consumption of the data storage unit 230.

FIG. 2 is an example of the clock supply units 233a-0, 233a-1, ... and 233a-n provided in the inside of the storage unit 233. However, the present embodiment is not limited to the clock supply units 233a-0, 233a-1, ... and 233a-n provided inside the storage unit 233. For example, the clock supply units 233a-0, 233a-1, ... and 233a-n may be provided outside the storage unit 233.

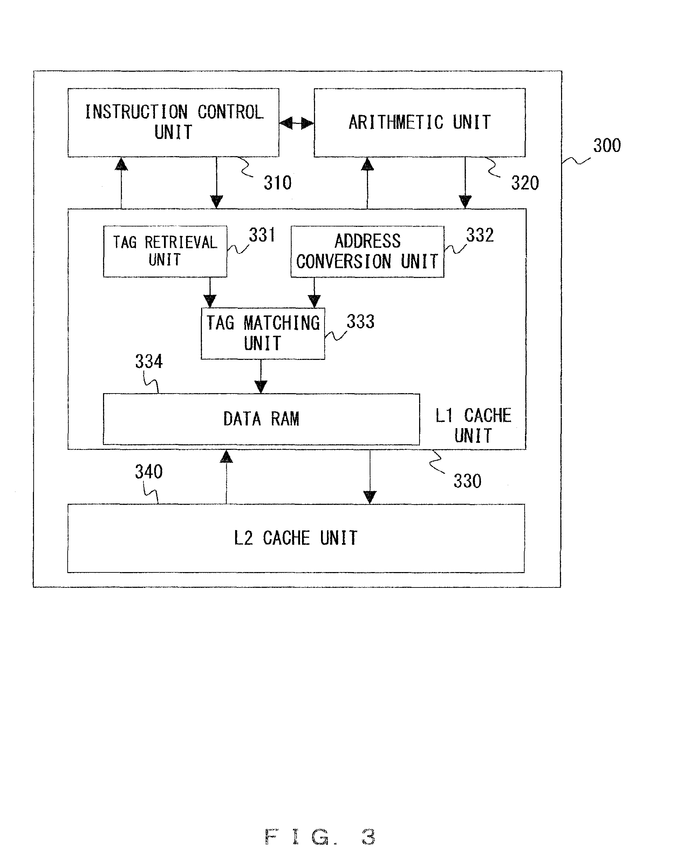

FIG. 3 is an example of the configuration of a part of a processor 300 in which the cache memory control device according to the present embodiment for an L1 cache unit 330.

The processor 300 illustrated in FIG. 3 includes an instruction control unit 310, an arithmetic unit 320, an L1 cache unit 330, and an L2 cache unit 340. The cache memory control device according to the present embodiment may be realized by the configuration including a TAG retrieval unit 331, an address conversion unit 332, and a TAG matching unit 333.

The instruction, control unit 310 reads a predetermined program instruction from non-volatile memory not illustrated in the attached drawings, but connected to the L1 cache unit 330, the L2 cache unit 340, and other processors 300, and executes the program instruction by allowing the arithmetic unit 320 to perform an operation etc. as necessary. The instruction control unit 310 determines the access to the L1 cache unit 330, for example, determines whether or not an instruction fetch request refers to sequential access. Then, the instruction control unit 310 notifies the L1 cache unit 330 of a determination result, for example, whether or not the instruction fetch request refers to sequential access.

The arithmetic unit 320 performs an arithmetic operation at an instruction from the instruction control unit 310.

The L1 cache unit 3.30 temporarily stores all or a part of the data read from the non-volatile memory not illustrated in the attached drawings but connected to the processor 300, the L2 cache unit 340, etc. Then, the L1 cache unit 330 outputs the data held inside the unit at a request from the instruction control unit 310 etc.

The L1 cache unit 330 includes the TAG retrieval unit 331, the address conversion unit 332, the TAG matching unit 333, and data RAM 334.

At an instruction fetch request from the instruction control unit 310, the TAG retrieval unit 331 retrieves a TAG matching the index included in the instruction address received with the instruction fetch request from the index table. The retrieving process is performed for each WAY included in the data RAM 334.

The TAG refers to the information for management of the data stored in the data RAM. In the present embodiment, the information including the physical address of the data stored in the data RAM is referred to as a TAG. The index table refers to the information stored associated with each index about TAG of data stored in the data RAM. The index table is provided for each WAY included in the data RAM 334.

Upon receipt of an instruction fetch request from the instruction control unit 310, the address conversion unit 332 refers to a TLB etc. Then, the address conversion unit 332 converts a virtual address (instruction address) received with the instruction fetch request into a physical address.

The TAG matching unit 333 compares the TAG output by the TAG retrieval unit 331 with the physical address output by the address conversion unit 332. Then, the TAG matching unit 333 determines that "TAG matching" has been achieved when the TAG output by the TAG retrieval unit 331 matches the physical address output by the address conversion unit 332, and reads the data from the WAY in which the TAG matching has been achieved.

In addition, upon receipt of a notification of the sequential access from the instruction control unit 310, the TAG matching unit 333 instructs the data RAM 334 to stop the supply of clocks to the WAYs other than the WAY in which the TAG matching has been achieved.

The data RAM 334 is memory including a plurality of WAYs. The data RAM 334 may supply a clock to the inside of each WAY, and may stop the supply of the clock to the inside of each WAY.

The L2 cache unit 340 temporarily stores all or a part of the data removed from the L1 cache unit 330.

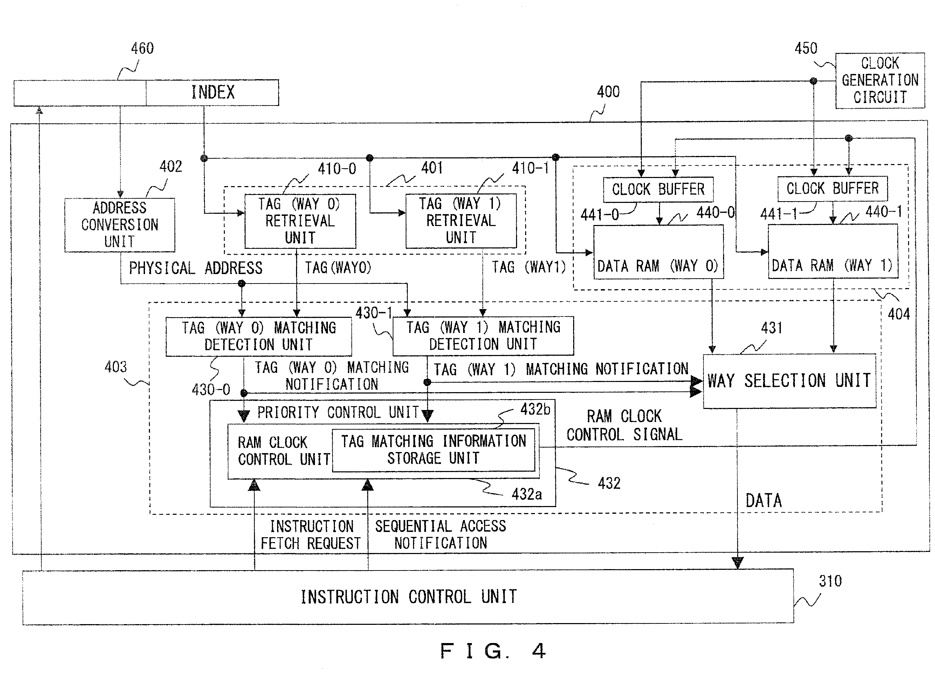

FIG. 4 is an example of a concrete configuration of the L1 cache unit 330 according to the present embodiment. In LTG. 4, for simple explanation, the case in which the data RAM 334 is configured by two WAYs is described, but the L1 cache unit 330 is not limited to the configuration illustrated in FIG. 4.

An L1 cache unit 400 includes a TAG retrieval unit 401, an address conversion unit 402, a TAG matching unit 403, and data RAM 404. The TAG retrieval unit 401, the address conversion unit 402, the TAG matching unit 403, and the data RAM 404 respectively correspond to the TAG retrieval unit 331, the address conversion unit 332, the TAG matching unit 333, and the data RAM 334.

The TAG retrieval unit 401 includes a TAG (MAY 0) retrieval unit 410-0 and a TAG (WAY 1) retrieval unit 410-1. The TAG matching unit 403 includes a TAG (MAY 0) matching detection unit 430-0, a TAG (WAY 1) matching detection unit 430-1, a MAY selection unit 431, and a priority control unit 432. The priority control unit 432 includes an RAM clock control unit 432a and a TAG matching information storage unit 432b. The data RAM 404 includes a data RAM (WAY 0) 440-0 and a clock buffer 441-0 of the WAY 0, and a data RAM (MAY 1) 440-1 and a clock buffer 441-1 of the WAY 1.

With the configuration above, when the instruction control unit 310 starts the execution of a program instruction, the instruction control unit 310 issues an instruction fetch request to the RAM clock control unit 432a in the L1 cache unit 400 as necessary. When the instruction fetch request is issued, the instruction control unit 310 outputs an instruction fetch request signal "1" to the RAM clock control unit 432a. When the instruction fetch request is not issued, the instruction control unit 310 outputs an instruction fetch request signal "0" to the RAM clock control unit 432a.

Simultaneously, when the instruction fetch request is issued, the instruction control unit 310 notifies an T-1 cache unit 400 of an instruction address 460 in which a desired instruction is stored. The instruction address 460 is output to the address conversion unit 402. The index included in the instruction address 460 is output to the TAG (WAY 0) retrieval unit 410-0, the TAG (WAY 1) retrieval unit 410-1, the data RAM (WAY 0) 440-0, and the data RAM (WAY 1) 440-1

The instruction control unit 310 determines whether or not the instruction fetch request output to the L1 cache unit 400 refers to the sequential access, and notifies the RAM clock control unit 432a in the L1 cache unit 400 of the result of the determination. The notification is called a "sequential access notification" . If it is determined that the instruction fetch request refers to the sequential access, the instruction control unit 310 outputs a sequential access notification signal "1" to the RAM clock control unit 432a. If it is determined that the instruction fetch request does not refer to the sequential access, the instruction control unit 310 outputs a sequential access notification signal "0" to the RAM clock control unit 432a.

Assume that, for example, a first program instruction is followed by a second program instruction, a third program instruction, ... requested at the instruction fetch request. The instruction control unit 310 determines the "sequential access" when the first WAY storing the first program instruction is requested for the second program instruction stored at the address consecutive to the instruction address at which the first program instruction is stored. Similarly, the instruction control unit 310 also determines the "sequential access" when the first WAY is requested for the third program instruction stored at the address consecutive to the instruction address at which the second program instruction is stored.

The sequential access according to the present embodiment is limited to the access corresponding to the same cache line.

At the instruction fetch request of the instruction control unit 310, the TAG (WAY 0) retrieval unit 410-0 retrieves the TAG matching the index included in the instruction address 460 received with the instruction fetch request from the index table of the data RAM (WAY 0) 440-0. Then, the TAG (WAY 0) retrieval unit 410-0 outputs the result of the retrieval to the TAG (WAY 0) matching detection unit 430-0. In this case, the TAG output by the TAG (WAY 0) retrieval unit 410-0 is referred to as a "TAG (WAY 0)".

At the instruction fetch request from the instruction control unit 310, the TAG (WAY 1) retrieval unit 410-1 retrieves the TAG matching the index included in the instruction address 460 received with the instruction fetch, request from the index table of the data RAM (WAY 1) 440-1. The TAG (WAY 1) retrieval unit 410-1 outputs the result of the retrieval to the TAG (WAY 1) matching detection, unit 430-1. In this case, the TAG output by the TAG (WAY 1) retrieval unit 410-1 is referred to as a "TAG (MAY 1)".

Upon receipt of the instruction fetch request from the instruction control unit 310, the address conversion unit 402 refers to the TLB etc. and converts the instruction address 460 into a physical address. Then the address conversion unit 402 outputs the physical address to the TAG (WAY 0) matching detection unit 430-0 and the TAG (WAY 1) matching detection unit 430-1.

The TAG (WAY 0) matching detection unit 430-0 compares the TAG output by the TAG (WAY 0) retrieval unit 410-0 with the physical address output by the address conversion unit 402. Then, the TAG (WAY 0) matching detection unit 430-0 outputs the result of the comparison to the WAY selection unit 431 and the RAM clock control unit 432a.

Similarly, the TAG (WAY 1) matching detection unit 430-1 compares the TAG output by the TAG (WAY 1) retrieval unit 410-1 with the physical address output by the address conversion unit 402. Then the TAG (WAY 1) matching detection unit 430-1 outputs the result of the comparison to the WAY selection unit 431 and the RAM clock control unit 432a.

Hereinafter, the output of the TAG (WAY 0) matching detection unit 430-0 or the TAG (WAY 1) matching detection unit 430-1 is referred to as "TAG matching". Especially, the TAG matching output by the TAG (WAY 0) matching detection unit 430-0 is referred to as "TAG (WAY 0) matching ", and the TAG matching output by the TAG (WAY 1) matching detection unit 430-1 is referred to as "TAG (WAY 1) matching ".

When the TAG output by the TAG (WAY 0) retrieval unit 410-0 matches the physical address output by the address conversion unit 402, the TAG (MAY 0) matching detection unit 430-0 outputs a TAG (WAY 0) matching signal "1" to the RAM clock control unit 432a. When the TAG output by the TAG (WAY 0) retrieval unit 410-0 does not match the physical address output by the address conversion unit 402, the TAG (WAY 0) matching detection unit 430-0 outputs a TAG (WAY 0) matching signal "0" to the RAM clock control unit 432a.

Similarly, the TAG output by the TAG (WAY 1) retrieval unit 410-1 matches the physical address output by the address conversion unit 402, the TAG (WAY 1) matching detection unit 430-1 outputs a TAG (WAY 1) matching signal "1" to the RAM clock control unit 432a. When the TAG output by the TAG (WAY 1) retrieval unit 410-1 does not match the physical address output by the address conversion unit 402, the TAG (WAY 1) matching detection unit 430-1 outputs a TAG (WAY 1) matching signal "0" to the RAM clock control unit 432a. According to the TAG matching signals output by the TAG (WAY 0) matching detection unit 430-0 and the TAG (WAY 1) matching detection unit 430-1, the WAY selection unit 431 selects the data RAM (WAY 0) 440-0 or the data RAM (WAY 1) 440-1. Then, the WAY selection unit 431 outputs the data output from the selected data RAM to the instruction control unit 310 etc.

Upon receipt of an abort request described later from the RAM clock control unit 432a, the priority control unit 432 performs an aborting process. The aborting process is, for example, to stop the process being performed and recover the processor 300 to the state in which the execution of a program instruction is correctly completed and restart the execution of a program instruction from the recovered state.

In addition to the aborting process, the priority control unit 432 arbitrates requests by re-inputting the instruction fetch request from the instruction control unit 310, and the instruction fetch request which has encountered a cache miss in the L1 cache unit 400.

The RAM clock control unit 432a determines whether or not the instruction address requested by the instruction fetch request is the leading address of the cache line in the data RAM (MAY 0) 440-0 or the data RAM (WAY 1) 440-1.

If it determines that the instruction address requested by the instruction fetch request is not the leading address of the cache line, then the RAM clock control unit 432a generates a cache line non-leading address signal "1". If it determines that the instruction address requested by the instruction fetch request is the leading address of the cache line, then the RAM clock control unit 432a generates a cache line non-leading address signal "0".

Then, the RAM clock control unit 432a stores the instruction fetch request signal and the sequential access notification signal from the instruction control unit 310 in the TAG matching information storage unit 432b for each pipeline of the instruction fetch.

Furthermore, the RAM clock control unit 432a stores a cache line non-leading address signal generated by the RAM clock control unit 432a in the TAG matching information storage unit 432b for each pipeline of the instruction fetch.

Then, the RAM clock control unit 432a stores the TAG (WAY 0) matching signal and the TAG (WAY 1) matching signal in the TAG matching information storage unit 432b for each pipeline of the instruction fetch.

The following table 1 indicates the TAG matching information stored in the TAG matching information storage unit 432b.

| | INSTRUCTION FETCH REQUEST | SEQUENTIAL ACCESS NOTIFICATION | CACHE LINE NON-LEADING ADDRESS | TAG MATCHING | |
|---|---|---|---|---|---|
| | | | | WAY0 | WAY1 |
| FIRST PIPELINE | a1 | b1 | c1 | d10 | d11 |
| SECOND PIPELINE | a2 | b2 | c2 | d20 | d21 |
| THIRD PIPELINE | a3 | b3 | c3 | d30 | d31 |

If the reference pipeline in the pipelines being executed is a "first pipeline", then the pipeline after the first pipeline is a "second pipeline", and the pipeline after the second pipeline is a "third pipeline".

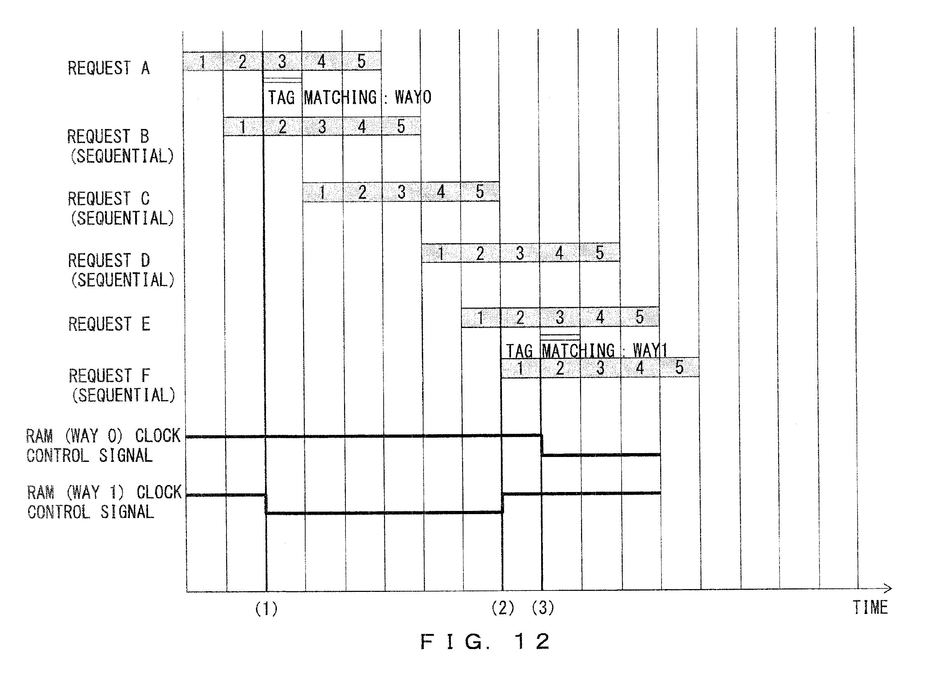

For example, in FIG. 12, when the pipeline for the request A is the first pipeline, the pipeline for the request B is the second pipeline, and the pipeline for the request C is the third pipeline.

The RAM clock control unit 432a determines whether or not there in an instruction fetch of the sequential access in the instruction fetches currently being processed according to the TAG matching information stored in the TAG matching information storage unit 432b. When there is an instruction fetch of the sequential access, the RAM clock control unit 432a outputs a RAM clock control signal for control of the supply and stop of a clock to the clock buffers 441-0 and 441-1. The RAM clock control signal to the clock buffer 441-0 is called a "RAM (WAY 0) clock control signal", the RAM clock control signal to the clock buffer 441-1 is called a "RAM (WAY 1) clock control signal".

If the RAM clock control unit 432a determines that the sequential access is being achieved to the data RAM (WAY 0) 440-0, then the RAM clock control unit 432a outputs a RAM (WAY 0) clock control signal "1" to the clock buffer 441-0. Simultaneously, the RAM clock control unit 432a outputs a RAM (WAY 1) clock control signal "0" to the clock buffer 441-1.

If the RAM clock control unit 432a determines that the sequential access be being achieved to the data RAM (MAY 1) 440-1, then the RAM clock control unit 432a outputs a RAM (WAY 0) clock control signal "0" to the clock buffer 441-0. Simultaneously, the RAM clock control unit 432a outputs a RAM (WAY 1) clock control signal "1" to the clock buffer 441-1.

The RAM clock control unit 432a may includes the function of monitoring the clock state of the data RAM (MAY 0) 440-0 and the data RAM (WAY 1) 440-1.

For example, the RAM clock control unit 432a may include the function of issuing an error notification to the priority control unit 432 if it is detected that the supply of a clock to both data RAM (WAY 0) 440-0 and data RAM (WAY 1) 440-1 is stopped. The error notification in this case is called an "abort request". The data RAM 404 is data RAM having two WAYs, that is, includes the data RAM (WAY 0) 440-0 and the data RAM (WAY 1) 440-1. In the present embodiment, data RAM (MAY 0) 440-0 is a WAY 0, and the data RAM (WAY 1) 440-1 is a WAY 1.

The data RAM 404 includes a clock buffer 441-0 for control of the supply and stop of a clock to the data RAM (WAY 0) 440-0 and the clock buffer 441-1 for control of the supply and stop of a clock to the data RAM (WAY 1) 440-1. The data RAM 404 according to the present embodiment includes the clock buffer 441-0 and the clock buffer 441-1 inside the data RAM 404, but the present embodiment is not limited to this configuration. It is obvious that the clock buffer 441-0 and the clock buffer 441-1 may be arranged outside the data RAM 404.

The clock buffer 441-0 and the clock buffer 441-1 receive a clock from a clock generation circuit 450. Then, the clock buffer 441-0 and the clock buffer 441-1 supply a clock to the data RAM (WAY 0) 440-0 and the data RAM (WAY 1) 440-1 depending on the RAM clock control signal from the RAM clock control unit 432a.

For example, the clock buffer 441-0 supplies a clock to the data RAM (WAY 0) 440-0 while the RAM (WAY 0) clock control signal is "0". The clock buffer 441-0 stops the supply of a clock to the data RAM (WAY 0) 440-0 while the RAM (WAY 0) clock control signal is "1". The clock buffer 441-1 operates similarly to the clock buffer 441-0.

The clock generation circuit 450 generates a clock having a predetermined cycle. The clock generation circuit 450 outputs the generated clock to the clock buffers 441-0 and 441-1.

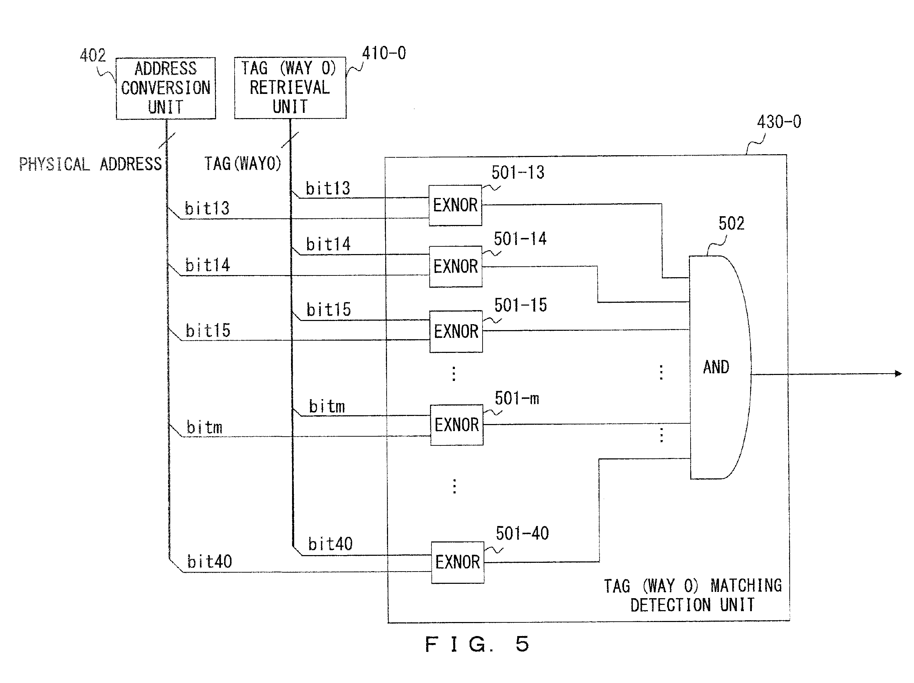

FIG. 5 is an examples of a practical configuration of the TAG (WAY 0) matching detection unit 430-0.

The TAG (WAY 0) matching detection unit 430-0 includes exclusive-NCR circuits 501-13, 501-14, 501-15, ... and 501-40, and a logical product circuit 502. In FIG. 5, the exclusive-NOR circuit is "EXNOR" for short, and the logical product circuit is "AND" for short.

The input terminal of the exclusive-NCR circuit 501-13 is connected to the output terminal for outputting the 13th bit of the physical address in the output terminals of the address conversion unit 402, and the output terminal for outputting the 13th bit of the TAG (WAY 0) in the output terminals of the TAG (WAY 0) retrieval unit 410-0. Other exclusive-NOR circuits 501-14, 501-15, ..., 501-m, ... and 501-40 have the same configuration as the exclusive-NOR circuit 501-13. The character m indicates a natural number equal to or exceeding 13, and equal to or less than 40. For example, the input terminal of the exclusive-NOR circuit 501-m is connected to the output terminal for outputting the m-th bit of the physical address in the output terminals of the address conversion unit 402, and the output terminal for outputting the m-th bit of the TAG (WAY 0) in the output terminals of the TAG (WAY 0) retrieval unit 410-0.

The input terminal of the logical product circuit 502 is connected to the output terminals of the exclusive-NOR circuits 501-13, 501-14, ... and 501-40. The output terminal of the logical product circuit 502 is connected to the input terminal of the RAM clock control unit 432a.

With the above-mentioned configuration, assume that a physical address and the TAG (WAY 0) are input respectively from the address conversion unit 402 and the TAG (WAY 0) retrieval unit 410-0 to the TAG (WAY 0) matching detection unit 430-0.

The exclusive-NOR circuit 501-13 outputs the exclusive-NOR of the 13th bit of the physical address and the 13th bit of the TAG (WAY 0) to the logical product circuit 502. The exclusive-NOR circuit 501-13 outputs "1" if the 13th bit of the physical address matches the 13th bit of the TAG (MAY 0), and outputs "0" if the 13th bit of the physical address does not match the 13th bit of the TAG (WAY 0). Other exclusive-NOR circuits 501-14, 501-15, ..., 501-m, ... and 501-40 operate similarly to the exclusive-NOR circuit 501-13.

For example, the exclusive-NOR circuit 501-m outputs the exclusive-NOR of the m-th bit of the physical address and the m-th bit of the TAG (WAY 0) to the logical product circuit 502. The exclusive-NOR circuit 501-m outputs "1" if the m-th bit of the physical address matches the m-th bit of the TAG (WAY 0), and outputs "0" if the m-th bit of the physical address does not match the m-th bit of the TAG (WAY 0).

The logical product circuit 502 outputs a logical product of the output of the exclusive-NOR circuits 501-13, 501-14, and ... 501-40.

For example, when the output of all of the exclusive-NOR circuits 501-13, 501-14, ... and 501-40 is "1", that is, the physical address matches the TAG (WAY 0), the logical product circuit 502 outputs a TAG (WAY 0) matching signal "1". When the output of the exclusive-NOR circuits 501-13, 501-14, ... or 501-40 includes "0", that is, when the physical address does not match the TAG (WAY 0), the logical product circuit 502 outputs a TAG (WAY 0) matching signal "0".

Although FIG. 5 is the configuration of the TAG (WAY 0) matching detection unit 430-0, the TAG (WAY 1) matching detection unit 430-1 has a similar configuration of the TAG (WAY 0) matching detection unit 430-0. However, the TAG (WAY 1) matching detection unit 430-1 does not receive the output TAG (WAY 0) of the TAG (WAY 0) retrieval unit 410-0, but receives the output TAG (WAY 1) of the TAG (WAY 1) retrieval unit 410-1. Then, the TAG (WAY 1) matching detection unit 430-1 outputs a TAG (MAY 1) matching signal to the RAM clock control unit 432a.

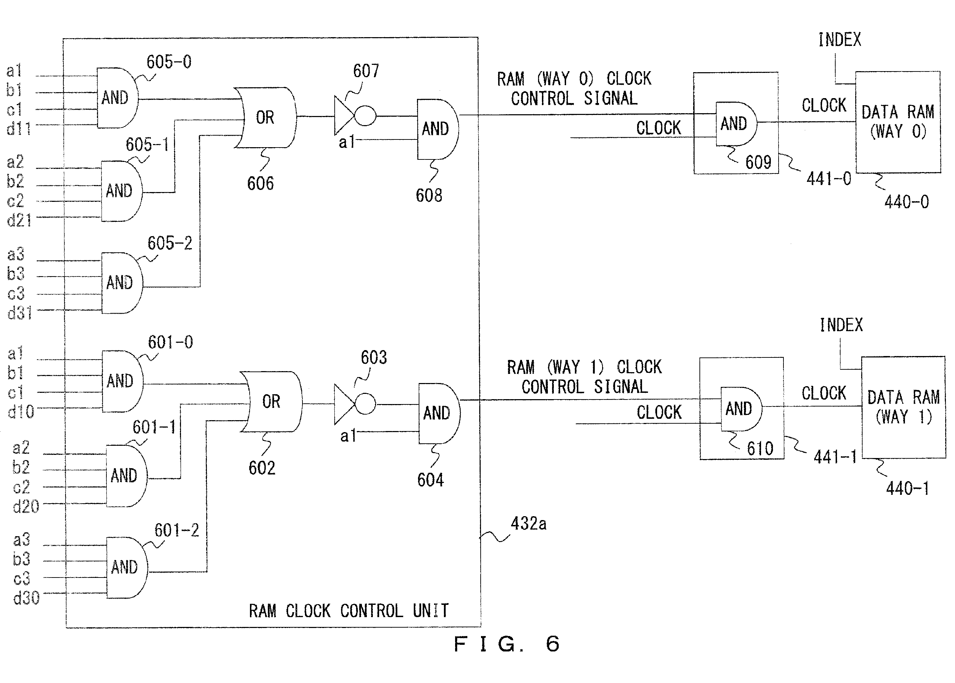

FIG. 6 is an example of a practical configuration of the important part of the RAM clock control unit 432a according to the present embodiment.

The RAM clock control unit 432a includes logical product circuits 601-0, 601-1, and 601-2, a logical sum circuit 602, an inversion circuit 603, and a logical product circuit 604. The RAM clock control unit 432a further includes logical product circuits 605-0, 605-1, and 605-2, a logical sum circuit 606, an inversion circuit 607, and a logical product circuit 608. In FIG. 6, "AND" is short for a logical product circuit, and "OR" is short for logical sum circuit.

The output terminals of the logical product circuits 601-0, 601-1, and 601-2 are connected to the input terminal of the logical sum circuit 602. The output terminal of the logical sum circuit 602 is connected to the input terminal of the inversion circuit 603. The output terminal of the inversion circuit 603 is connected to the input terminal of the logical product circuit 604. In addition to the output terminal of the inversion circuit 603, the input terminal of the logical product circuit 604 is also connected to the output terminal of the instruction control unit 310, and receives an instruction fetch request signal. The output terminal of the logical product circuit 604 is connected to the clock buffer 441-1, that is, the input terminal of a logical product circuit 610.

The output terminals of the logical product circuits 605-0, 605-1, and 605-2 are connected to the input terminal of the logical sum circuit 606. The output terminal of the logical sum circuit 606 is connected to the input terminal of the inversion circuit 607. The output terminal of the inversion circuit 607 is connected to the input terminal of the logical product circuit 608. In addition to the output terminal of the inversion circuit 607, the input terminal of the logical product circuit 608 is also connected to the output terminal of the instruction control unit 310, and receives an instruction fetch request signal. The output terminal of the logical product circuit 608 is connected to the clock buffer 441-0, that is, the input terminal of a logical product circuit 609.

With the above-mentioned configuration, the TAG matching information about the first pipeline in the TAG matching information stored, in the TAG matching information storage um t 432b is input to the logical product circuit 601-0 and the logical product circuit 605-0. However, the TAG (WAY 1) matching is excluded from the input to the logical product circuit 601-0. In addition, the TAG (WAY 0) matching is excluded from the input to the logical product circuit 605-0.

For example, an instruction fetch request a1, a sequential access notification b1., a cache line non-leading address c1, and a TAG (WAY 0) matching d10 listed in Table 1 are input to the logical product circuit 601-0. The instruction fetch request a1, the sequential access notification b1, the cache line non-leading address c1, and a TAG (WAY 1) matching d11 listed in Table 1 are input to the logical product circuit 605-0.

The TAG matching information about the second pipeline in the TAG matching information stored in the TAG matching information storage unit 432b is input to the logical product circuit 601-1 and the logical product circuit 605-1. However, the TAG (WAY 1) matching is excluded from the input to the logical product circuit 601-1. In addition, the TAG (WAY 0) matching is also excluded from the input to the logical product circuit 605-1.

For example, an instruction, fetch request a2, a sequential access notification b2, a cache line non-leading address c2, and a TAG (WAY 0) matching d20 listed in Table 1 are input to the logical product circuit 601-1. The instruction fetch request a2, the sequential access notification b2, the cache line non-leading address c2, and a TAG (WAY 1) matching d21 listed in Table 1 are input to the logical product circuit 605-1.

The TAG matching information about the third pipeline in the TAG matching information stored in the TAG matching information storage unit 432b is input to the logical product circuit 601-2 and the logical product circuit 605-2. However, the TAG (WAY 1) matching is excluded from the input to the logical product circuit 601-2. In addition, the TAG (WAY 0) matching is also excluded from the input to the logical product circuit 605-2.

For example, an instruction fetch request a3, a sequential access notification b3, a cache line non-leading address c3, and a TAG (MAY 0) matching d30 listed in Table 1 are input to the logical product circuit 601-2. The instruction fetch request a3, the sequential access notification, b3, the cache line non-leading address c3, and a TAG (WAY 1) matching d31 listed in Table 1 are input to the logical product circuit 605-2.

When the instruction fetch request a1, the sequential access notification b1, the cache line non-leading address c1, and the TAG (WAY 0) matching d10 are all "1", the logical product circuit 601-0 outputs "1". That is, when the instruction fetch in the first pipeline refers to the sequential access to the same cache line in the WAY 0, the logical product circuit 601-0 outputs "1".

When at least one of the instruction fetch request a1, the sequential access notification b1, the cache line non-leading address c1, and the TAG (WAY 0) matching d10 is "0", the logical product circuit 601-0 outputs "0".

For example, if the instruction fetch request a1. is "1", and the sequential access notification b1 is "0", that is, the instruction fetch request does not refer to the sequential access, then the logical product circuit 601-0 outputs "0" . In addition, when the TAG (WAY 0) matching d10 is "0", that is, no TAG (WAY 0) matching is detected, then the logical product circuit 601-0 outputs "0".

When the instruction fetch request a2, the sequential access notification b2, the cache line non-leading address c2, and the TAG (WAY 0) matching d20 are all "1", the logical product circuit 601-1 outputs "1". That is, when the instruction fetch in the second pipeline refers to the sequential access to the same cache line in the WAY 0, the logical product circuit 601-1 outputs "1".

When at least one of the instruction fetch request a2, the sequential access notification b2, the cache line non-leading address c2, and the TAG (NAY 0) matching d20 is "0", the logical product circuit 601-1 outputs "0".

For example, if the instruction fetch request a2 is "1", and the sequential access notification b2 is "0", that is, the instruction fetch request does not refer to the sequential access, then the logical product circuit 601-1 outputs "0" In addition, wen the TAG (WAY 0) matching d20 is "0", that is, no TA G (MAY 0) matching is detected, then the logical product circuit 601-1 outputs "0".

When the instruction fetch request a3, the sequential access notification b3, the cache line non-leading address c3, and the TAG (WAY 0) matching d30 are all "1", the logical product circuit 601-2 outputs "1". That is, when the instruction fetch in the third pipeline refers to the sequential access to the same cache line in the WAY 0, the logical product circuit 601-2 outputs "1"_{.}

When at least one of the instruction fetch request a3, the sequential access notification b3, the cache line non-leading address c3, and the TAG (WAY 0) matching d30 is "0", the logical product circuit 601-2 outputs "0".

For example, if the instruction fetch request a3 is "1", and the sequential access notification b3 is "0", that is, the instruction fetch request does not refer to the sequential access, then the logical product circuit 601-2 outputs "0". In addition, when the TAG (WAY 0) matching d30 is "0", that is, no TAG (WAY 0) matching is detected, then the logical product circuit 60J.-2 outputs "0".

When at least one of the output of the logical product circuits 601-0, 601-1, and 601-2 is "1", the logical sum circuit 602 outputs "1". That is, when at least one of the instruction fetches being executed in the first through third pipelines refers to the sequential access to the same cache line in the WAY 0, the logical sum circuit 602 outputs "1".

Then, when all of the logical product circuits 601-0, 601-1, and 601-2 output "0", the logical sum circuit 602 outputs "0". For example, the logical sum circuit 602 outputs "0" when the instruction fetch for performing the sequential access to the same cache line in the WAY 0 is not executed in any of the first through third pipelines.

The inversion circuit 603 inverts the signal output by the logical sum circuit 602, an outputs the inverted signal to the logical product circuit 604. When the logical sum circuit 602 outputs "0", the inversion circuit 603 outputs "1" to the logical product circuit 604. When the logical sum circuit 602 outputs "1", the inversion circuit 603 outputs "0" to the logical product circuit 604.

The logical product circuit 604 outputs the logical product of the signal output by the inversion circuit 603 and the instruction fetch request a1 to the logical product circuit 610 as a RAM (WAY 1) clock control signal.

Therefore, the logical product circuit 604 outputs the RAM (WAY 1) clock control signal" "1" when the signal output by the inversion circuit 603 and the instruction fetch request a1 are "1". For example, the logical product circuit 604 outputs the RAM (WAY 1) clock control signal "1" when the instruction fetch for performing the sequential access to the same cache line in the WAY 0 is not executed in any of the first through third pipelines.

When at least one of the signal output by the inversion circuit 603 and the instruction fetch request a1 is "0", the logical product circuit 604 outputs the RAM (WAY 1) clock control signal "0".

For example, the logical product circuit 604 outputs the RAM (WAY 1) clock control signal "0" when at least one of the instruction fetches being executed in the first through third pipelines refers to the sequential access to the same cache line in the MAY 0 . In addition, the logical product circuit 604 also outputs the RAM (WAY 1) clock control signal "0" when no instruction fetch request is detected.

The clock buffer 441-1 includes the logical product circuits 610. The input terminator the logical product circuit 610 is connected to the output terminal of the logical product circuit 604 in the RAM clock control unit 432a and the output terminal of the clock generation circuit 450. Then, the output terminal of the logical product circuit 610 is connected to the input terminal of the data RAM (WAY 1) 440-1.

The logical product circuit 610 outputs the output of the logical product circuit 604, that is, the logical product of the RAM (WAY 1) clock control signal and the clock, to the data RAM (WAY 1) 440-1.

Therefore, the clock buffer 441-1 outputs the clock to the data RAM (WAY 1) 440-1 when the RAM (WAY 1) clock control signal "1" is input from the RAM clock control unit 432a.

For example, no instruction fetch for performing the sequential access to the same cache line in the WAY 0 in the first through third pipelines is not executed, the clock buffer 441-1 outputs the clock to the data RAM (WAY 1) 440-1.

The clock buffer 441-1 stops outputting a clock to the data RAM (WAY 1) 440-1 when the RAM (WAY 1) clock control signal "0" is input from the RAM clock control unit 432a.

For example, when the instruction fetch being executed in the first through third pipelines refers to the sequential access to the same cache line in the WAY 0, the clock buffer 441-1 stops outputting a clock to the data RAM (WAY 1) 440-1.

In addition, when an instruction fetch request is not detected, the clock buffer 441-1 also stops outputting a clock to the data RAM (MAY 1) 440-1.

On the other hand, like the logical product circuit 601-0, the logical product circuit 605-0 outputs "1" when the instruction fetch request a1. the sequential access notification b1, the cache line non-leading address c1 and the TAG (WAY 1) matching d11 are all "1". That is, when the instruction fetch in the first pipeline refers to the sequential access to the same cache line in the MAY 1, the logical product circuit 605-0 output "1". .

The logical product circuit 605-0 outputs "0" when at least one of the instruction fetch request a1, the sequential access notification b1, the cache line non-ieading address c1, and the TAG (WAY 1) matching d11 is "0". .

For example, when the instruction fetch request a1 is "1" and the sequential access notification b1 is "0", that is, when the instruction fetch request does not refer to the sequential access, the logical product circuit 605-0 outputs "0". In addition, when the TAG (WAY 1) matching d11 is "0", that is, when no TAG (WAY 1) matching is detected, the logical product circuit 605-0 outputs "0".

Like the logical product circuit 601-1, the logical product circuit 605-1 outputs "1" when the instruction fetch request a2, the sequential access notification b2, the cache line non-leading address c2, and the TAG (WAY 1) matching d21 are all "1". That is, when the instruction fetch in the second pipeline refers to the sequential access to the same cache line in the WAY 1, the logical product circuit 605-1 outputs "1".

Furthermore, the logical product circuit 605-1 outputs "0" when at least one of the instruction fetch request a2, the sequential access notification b2, the cache line non-leading address c2, and the TAG (WAY 1) matching d21 is "0".

For example, when the instruction fetch request a2 is "1" and the sequential access notification b2 is "0", that is, the instruction fetch request does not refer to the sequential access, the logical product circuit 605-1 outputs "0". In addition, when the TAG (WAY 1) matching d21 is "0", that is, no TAG (WAY 1) matching is detected, the logical product circuit 605-1 outputs "0".

Like the logical product circuit 601-2, the logical product circuit 605-2 outputs "1" when the instruction fetch request a3, the sequential access notification b3, the cache line non-leading address c3, and the TAG (WAY 1) matching d31 are all "1"- That is, when the instruction fetch in the third pipeline refers to the sequential access to the same cache line in the WAY the logical product circuit 605-2 outputs. "1". Furthermore, the logical product circuit 605-2 outputs "0" when at least one of the instruction fetch request a3, the sequential access notification b3, the cache line non-leading address c3, and the TAG (WAY 1) matching d31 is "0".

For example, when the instruction fetch request a3 is "1" and the sequential access notification b3 is "0", that is, the instruction fetch request does not refer to the sequential access, the logical product circuit 605-2 outputs "0" . In addition, when the TAG (WAY 1) matching d31 is "0", that is, no TAG (WAY 1) matching is detected, the logical product circuit 605-2 outputs "0".

The logical sum circuit 606 outputs "1" when at least one of the output from the logical product circuits 605-0, 605-1, and 605-2 is "1". That is, the logical sum circuit 606 outputs "1" when at least one instruction fetch in the instruction fetches being executed in the first through third pipelines refers to the sequential access to the same cache line in the WAY 1.

Then, the logical sum circuit 606 outputs "0" when all of the logical product circuits 605-0, 605-1, and 605-2 output "0" . For example, the logical sum circuit 606 outputs "0" when no instruction fetch for performing the sequential access to the same cache line in the WAY 1 is executed in any of the first through third pipelines.

The inversion circuit 607 inverts the signal output by the logical sum circuit 606, and outputs the inverted signal to the logical product circuit 608. If the logical sum circuit 606 outputs "0", the inversion circuit 607 outputs "1" to the logical product circuit 608. When the logical sum circuit 606 outputs "1", the inversion, circuit 607 outputs "0" to the logical product circuit 608.

The logical product circuit 608 outputs to the logical product circuit 610 the logical product of the signal output by the inversion circuit 607 and the instruction fetch request a1 as the RAM WAY 1) clock control signal.

Therefore, the logical product circuit 608 cutouts the RAM (WAY 1) clock control signal "1" when the signal output by the inversion circuit 607 and the instruction fetch request a1 are "1". For example, the logical product circuit 608 outputs the RAM (WAY 1) clock control signal "1" when no instruction fetch for performing the sequential access to the same cache line in the WAY 1 is executed in any of the first through third pipelines.

When at least one of the signal output by the inversion circuit 607 and the instruction fetch request a1 is "0", the logical product circuit 608 outputs the RAM (WAY 1) clock control signal "0".

For example, the logical product circuit 608 outputs the RAM (WAY 1) clock control signal "0" when at least one of the instruction fetches being executed in the first through third pipelines refers to the sequential access to the same cache line in the WAY 1. In addition, the logical product circuit 608 outputs the RAM (WAY 1) clock control signal "0" when no instruction fetch request is detected. In this case, the supply of a clock to the data RAM (WAY 0) 440-0 is stopped as described later.

The clock buffer 441-0 includes the logical product circuit 609. The input terminal of the logical product circuit 609 is connected to the output terminal of the logical product circuit 608 in the RAM clock control unit 432a and the output terminal of the clock generation circuit 450. Then, the output terminal of the logical product circuit 609 is connected to the data RAM (WAY 0) 440-0.

The logical product circuit 609 outputs the output of the logical product circuit 608, that is, the logical product of the RAM (WAY 0) clock control signal and the clock to the data RAM (WAY 0) 440-0.

Therefore, when the RAM (WAY 0) clock control signal "1" is received from the RAM clock control unit 432a the clock buffer 441-0 outputs a clock to the data RAM (MAY 0) 440-0.

For example, when no sequential access is performed to the same cache line in the WAY 1 in the first through third pipelines, the clock buffer 441-0 outputs a clock to the data RAM (WAY 0) 440-0.

When the RAM (WAY 0) clock control signal "0" is input from the RAM clock control unit 432a, the clock buffer 441-0 stops the output of a clock to the data RAM (WAY 0) 440-0.

For example, when the instruction fetch being executed in the first through third pipelines refers to the sequential access to the same cache line in the WAY 1, the clock buffer 441-0 stops the output of a clock to the data RAM (WAY 0) 440-0.

When no instruction fetch request is detected, the clock buffer 441-0 also stops the output of a clock to the data RAM (WAY 0) 440-0.

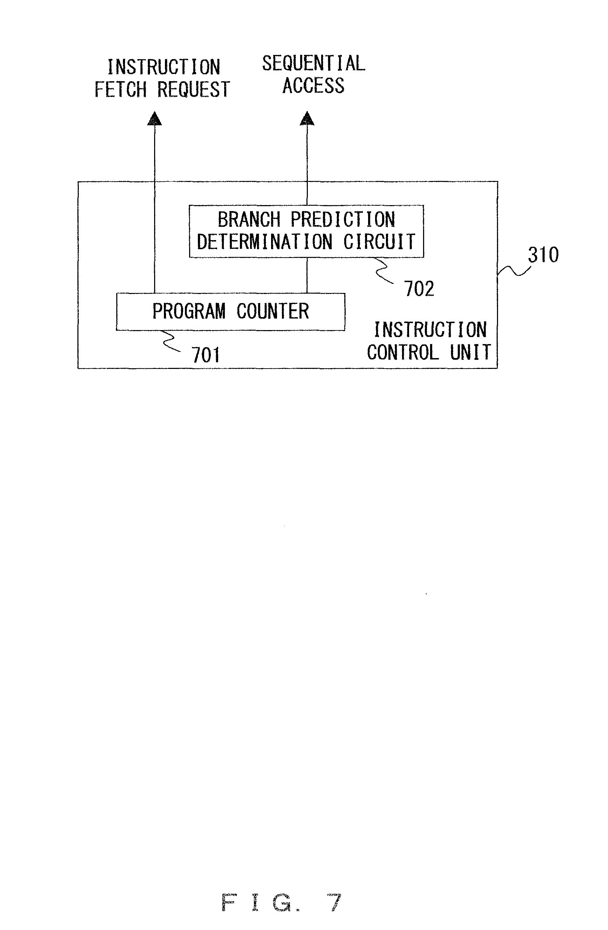

FIG. 7 is an explanatory view of the outline of the operation of the instruction control unit 310 according to the present embodiment.

The instruction control unit 310 includes a program counter 701 and a branch prediction determination circuit 702.

The program counter 701 is a storage unit for holding the instruction address 460 which stores the program instruction to be next executed. The program counter 701 may be, for example, a register.

When the execution of a predetermined program instruction is completed, the instruction control unit 310 acquires the instruction address 460 from the program counter 701, and increments the program counter 701 by the length of the instruction. Then, the instruction control unit 310 issues an instruction fetch request to the L1 cache unit 400, and notifies the L1 cache unit 400 of the instruction address 460.

The branch, prediction, determination circuit 702 determines whether or not the instruction fetch request issued to the L1 cache unit 400 refers to the sequential access, and notifies the L1 cache unit 400 of the result of the determination.

In the present embodiment, it is normally determined that the access to the L1 cache unit 400, for example, an instruction fetch request, refers to the sequential access. Therefore, the instruction control unit 310 normally notifies the L1 cache unit 400 that the sequential access is being performed.

When the branch prediction determination circuit 702 predicts a branch of the program instruction being executed, the instruction control unit 310 determines that the sequential access has become invalid, and notifies the L1 cache unit 400 that the sequential access is not performed.

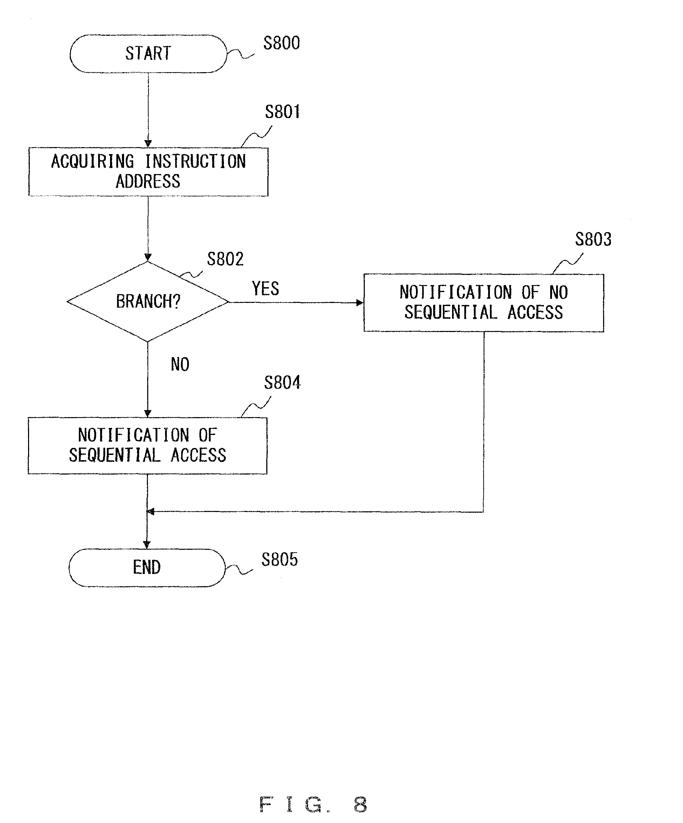

FIG. 8 is a flowchart of the determining process of the sequential access according to the present embodiment.

In step S801, the instruction control unit 310 acquires the instruction address 460 from the program counter 701.

In step S802, the instruction control unit 310 makes a branch prediction.

If a branch is predicted (YES in step S802), the instruction control unit 310 determines that no sequential access has been performed. In this case, the instruction control unit 310 passes control to step S803, and notifies the RAM clock controls unit 432a of no sequential access (step S803). For example, the instruction control unit 310 outputs the sequential access notification signal "0" to the RAM clock control unit 432a.

If no branch is determined (NO in step S802), the instruction control unit 310 determines that the sequential access has been performed. In this case, the instruction control unit 310 passes control to step S804, and notifies the RAM clock control unit 432a of the sequential access (step S804). For example, the instruction control unit 310 outputs the sequential access notification signal "1" to the RAM clock control unit 432a.

Used in the branch prediction is a branch history including the history information containing the instruction address of the branch instruction executed before and a branch destination address provided by the branch instruction.

For example, each time the instruction address 460 is acquired from the program counter, it is checked whether or not the acquired instruction address 460 is entered in the branch history. If the instruction address 460 is entered in the branch history, the instruction control unit 310 predicts a branch. If the instruction address 460 is not entered in the branch history, the instruction control unit 310 predicts a non-branch.

When a call instruction of a subroutine in the program instruction is executed, a return address from the subroutine by a return instruction may be held, and the return address may be used in the branch prediction. If the program instruction is a return instruction, and the instruction address 460 is an already held return address, then the instruction control unit 310 may predict a branch.

In addition, the instruction control unit 310 may also determine non-sequential access about the first instruction fetch request issued again after the detection of a failure of a branch prediction and the cancellation of the request already issued in the pipeline processing of the processor 300 described later (YES in step S802) . In this case, the instruction control unit 310 determines non-sequential access regardless of a requested instruction address.

The instruction control unit 310 may also determine non-sequential access about the first instruction fetch request issued after recovering trap processing (YES in step S802).

If the above-mentioned processing terminates, the instruction control unit 310 terminates the process (step S805).

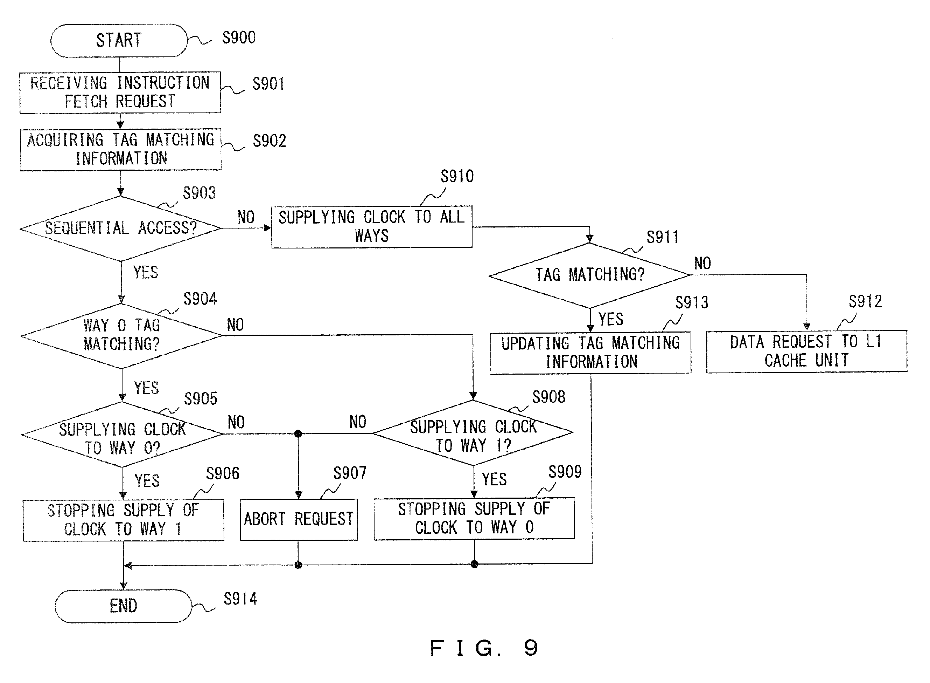

FIG. 9 is a flowchart of clock control of the data RAM 404 according to the present embodiment.

Upon receipt of an instruction fetch request from the instruction control unit 310 (step S901), the RAM clock control unit 432a passes control to step S902. Then, the RAM clock control unit 432a acquires TAG matching information from the TAG matching information storage unit 432b (step S902). Then, the RAM clock control unit 432a determines from the TAG matching Information whether or not at least one of the instruction fetches being executed in the first through third pipelines refers to the sequential access to the same cache line in the same WAY (step S903).

If it is determined that at least one of the instruction fetches being executed in the first through third pipelines refers to the sequential access to the same cache line in the same WAY (YES in step S903), the RAM clock control unit 432a passes control to step S904.

In step S904, the RAM clock control unit 432a determines from the acquired TAG matching information whether or not the TAG matching WAY is the WAY 0.

If the TAG matching in the WAY 0 is determined (YES in step S904), the RAM clock control unit 432a passes control to step S905. In this case, the RAM clock control unit 432a determines whether or not a clock has been supplied to the data RAM (WAY 0) 440-0 (step S905).

If the clock of the data RAM (WAY 0) 440-0 has been supplied (YES in step S905), the RAM clock control unit 432a passes control to step S906. In this case, the RAM clock control unit 432a supplies a clock to the data RAM (WAY 0) 440-0, and stops a clock to the data RAM (WAY 1) 440-1 (step S906) . For example, the RAM clock control unit 432a outputs the RAM (WAY 0) clock control signal "1" to the clock buffer 441-0, and outputs the RAM (WAY 1) clock control signal "0" to the clock buffer 441-1. When a clock is stopped to the data RAM (WAY 0) 440-0 (NO in step S905), the RAM clock control unit 432a passes control to step S907. In this case, the RAM clock control unit 432a notifies the priority control unit 432 of an abort request (step S907).

If the TAG matching in the WAY 1 is determined in step S904 (NO in step S904), the RAM clock control unit 432a passes control to step S908. In this case, the RAM clock control unit 432a determines whether or not a clock is supplied to the data RAM (MAY 1) 440-1 (step S908).

If a clock is supplied to the data RAM (MAY 1) 440-1 (YES in step S90B) the RAM clock control unit 432a passes control to step S909. In this case, the RAM clock control unit 432a suppliers a clock to the data RAM (WAY 1) 440-1, and the supply of a clock is stopped to the data RAM (WAY 0) 440-0 (step S909). For example, the RAM clock control unit 432a outputs the RAM (MAY 0) clock control signal "0" to the clock buffer 441-0, and outputs the RAM (WAY 1) clock control signal "1" to the clock buffer 441-1.

When the supply of a clock is stopped to the data RAM (WAY 1) 440-1 (NO in step S908), the RAM clock control unit 432a passes control to step S907. In this case, the RAM clock control unit 432a notifies the priority control unit 432 of an abort request (step S907).

On the other hand, if it is determined in step S903 that the instruction fetch being executed in the first through third pipelines refers to non-sequential access to the same cache line in the same WAY (NO in step S903), the RAM clock control unit 432a passes control to step S910. In this case, the RAM clock control unit 432a supplies a clock to all WAYs provided for the data RAM 334, that is, the data RAM (WAY 0) 440-0 and the data RAM (WAY 1) 440-1 in the present embodiment (step S910). For example, the RAM clock control unit 432a outputs the RAM (WAY 0) clock control signal "1"to the clock buffer 441-0, and the RAM (WAY 1) clock control signal "1" to the clock buffer 441-1.

In step S911, the RAM clock control unit 432a determines the presence/absence of the TAG matching from the output of the TAG (WAY 0) matching detection unit 430-0 and the TAG (WAY 1) matching detection, unit 430-1.

When the TAG matching is not detected (NO in step S911), the RAM clock control unit 432a passes control to step S912. In this case, the L1 cache unit 330 issues a data request to the L2 cache unit 340 via the priority control unit 432 (step S912).

When the TAG matching is detected (YES in step S911), the RAM clock control unit 432a passes control to step S913. In this case, the RAM clock control unit 432a updates the TAG matching information (step S913).

When the above-mentioned process is completed, the L1 cache unit 330 terminates the clock control process of the data RAM 404.

Then, the TAG matching unit 403 acquires data by selecting a MAY in which the TAG matching is detected, that is, one of the data RAM (WAY 0) 440-0 and the data RAM (WAY 1) 440-1 in the present embodiment.

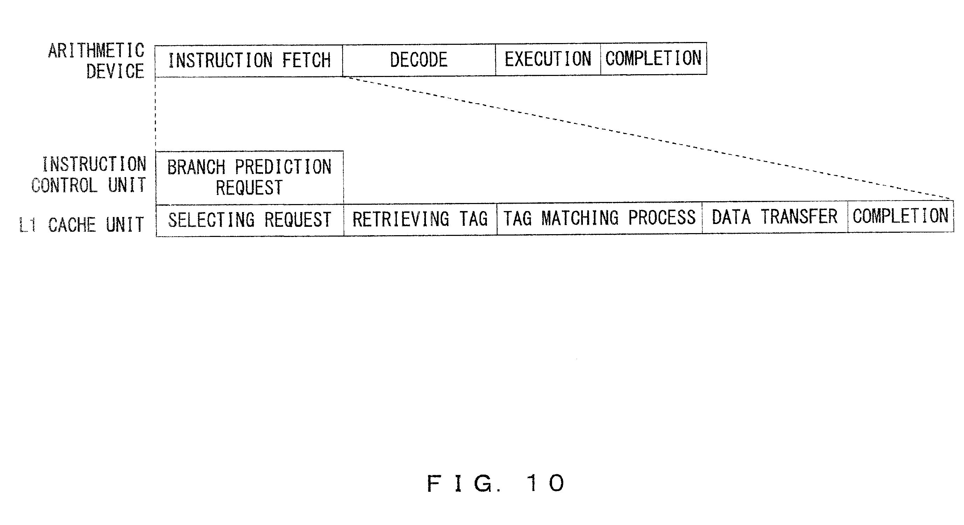

FIG. 10 is an explanatory view of the pipeline processing of an instruction fetch according to the present embodiment.

In the processor 300, a program instruction is roughly classified into four processes, that is, "instruction fetching", "decoding", "executing", and "completing". The process is referred to as "pipeline processing of the processor 300".

For example, the "instruction fetching" is a process of acquiring a program instruction from the L1 cache unit 400 etc. The "decoding" is a process of dividing the acquired program instruction into the format significant for the processor 300. The "executing" is a process of performing an arithmetic process etc. according to the decoded program instruction. The "completing" is a process of determining whether or not all processes have been completed and storing the execution result in the L1 cache unit 400 etc.

In the instruction fetching process, the instruction control unit 310 makes a branch prediction and issues a request (instruction fetch request) as described above with reference to FIG. 7. Upon receipt of the instruction fetch request from the instruction control unit 310, the L1 cache unit 400 performs instruction fetching by dividing the entire process into the processes of "request selecting", "TAG retrieving", "TAG matching", "data transferring", and "completing". The entire process is called "pipeline processing of an instruction fetch".

The "request selecting" is a process of selecting an instruction fetch, request received, from the instruction, control unit 310. The "TAG retrieving" is a process of performing TAG retrieval. The "TAG matching process" is a process of performing TAG matching. The "data transferring" is a process of acquiring data from the WAY in which TAG matching is achieved and transferring the data to the instruction control unit 310. The "completing" is a process of determining whether or not the instruction fetch has been completed.

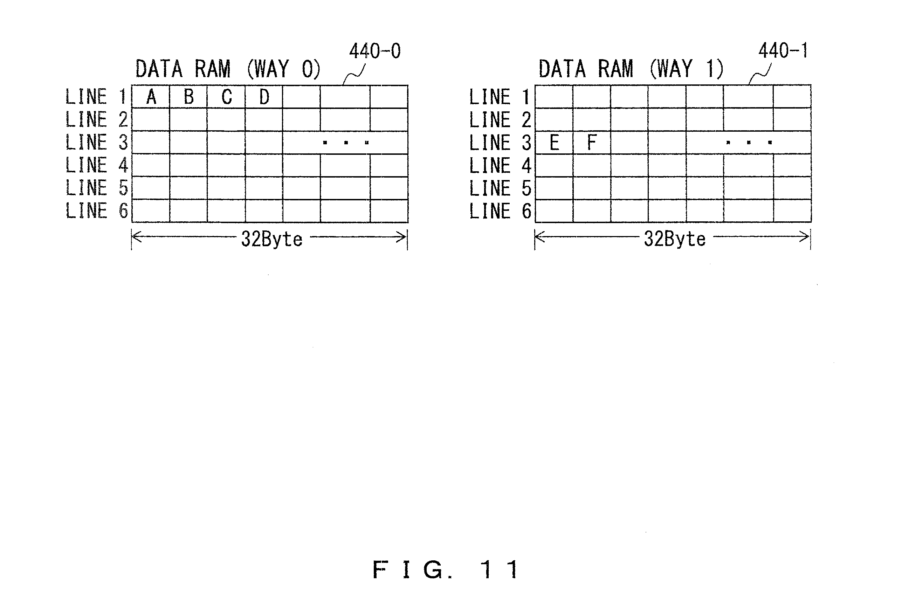

FIGS. 11 and 12 are explanatory views of concrete pipeline processing of an instruction fetch according to the present embodiment.

FIG. 11 illustrates the case in which program instructions A, B, C, and D are continuously stored on the line 1 of the data RAM (WAY 0) 440-0, and program instructions E and F are continuously stored on the line 3 of the data RAM (WAY 1) 440-1.

For simplicity, the data width of one line of the data RAM (WAY 0) 440-0 and the data RAM (WAY 1) 440-1 is set as 32 bytes. It is assumed that each of the program instructions A, B, C, D, E, and F has a data width of 8 bytes (64 bits).

The pipeline processing of an instruction fetch for reading the program instructions illustrated in FIG. 11 in the order of A, B, C, D, E, and F is described below with reference to FIG. 12. The numbers 1, 2, 3, 4, and 5 illustrated in FIG. 12 respectively indicate the processes of "request selection", "TAG retrieval", "TAG matching process", "data transfer'", and "completion" as illustrated in FIG. 10.

FIG. 12 also illustrates a RAM (WAY 0) clock control signal to the data RAM (WAY 0) 440-0 and a RAM (WAY 1) clock control signal to the data RAM (WAY 1) 440-1 in the pipeline processing of an instruction fetch. When the RAM (WAY 0) clock control signal is "0", the clock in the data RAM (WAY 0) 440-0 stops. When the RAM (WAY 0) clock control signal is "1", a clock is supplied into the data RAM (WAY 0) 440-0. The RAM (WAY 1) clock control signal is similar to the RAM (WAY 0) clock control signal.
(1) Upon receipt of the request A from the instruction control unit 310, the L1 cache unit 400 starts executing the instruction fetch to the program instruction A.
   The requests B, C, and D following the request A are instruction fetch requests for the program instructions B, C, and D continuously stored on the same line as illustrated in FIG. 11. In this case, the instruction control unit 310 determines the requests B, C, and D following the request A as the sequential access according to the process in FIG. 8. Therefore, while the requests following the request A perform the sequential access, the L1 cache unit 400 outputs the clock control signal "0" of the RAM (WAY 1) as a WAY other than the WAY 0 in which the TAG matching is detected. As a result, a clock is provided for the WAY in which the TAG matching is detected, that is, only the data RAM (WAY 0) 440-0, and a clock is stopped to the other WAYs, that is, the data RAM (WAY 1) 440-1.
(2) However, the request E received after the request D is not continuously stored on the same line as the program instruction D as illustrated in FIG. 11, but stored at the leading position on the line 3 of the data RAM (WAY 1) 440-1. In this case, the L1 cache unit 400 determines that the request E refers to non-sequential access by the process illustrated in FIG. 8. Then, by the process in step S910 illustrated in FIG. 9, the L1 cache unit 400 sets the RAM (WAY 0) clock control signal and the RAM (WAY 1) clock control signal to "1". Thus, a clock is supplied to all WAYs, that is, the data RAM (WAY 0) 440-0 and the data RAM (WAY 1) 440-1 in the present embodiment.
(3) The request F following the request E is an instruction fetch request for the program instruction F stored continuously on the same line as the program instruction E as illustrated in FIG. 11. In this case, the instruction control unit 310 determines the request F as the sequential access by the process illustrated in FIG. 8.

In this case, the L1 cache unit 400 sets the RAM (MAY 0) clock control signals of the WAYs other than the WAY 1 in which the TAG matching is detected to "0". As a result, a clock is supplied only to the WAY in which the TAG matching is detected, that is, the data RAM (NAY 1) 440-1, and the supply of a clock is stopped to other WAYs, that is, the data RAM (WAY 0) 440-0.

The configuration illustrated in FIG. 11 is an example, and the program instruction is not limited to 8 bytes, or one line is not limited to 32 bytes. Similarly, the data RAM (WAY 0) 440-0 and the data RAM (WAY 1) 440-1 are not limited to 6 lines.

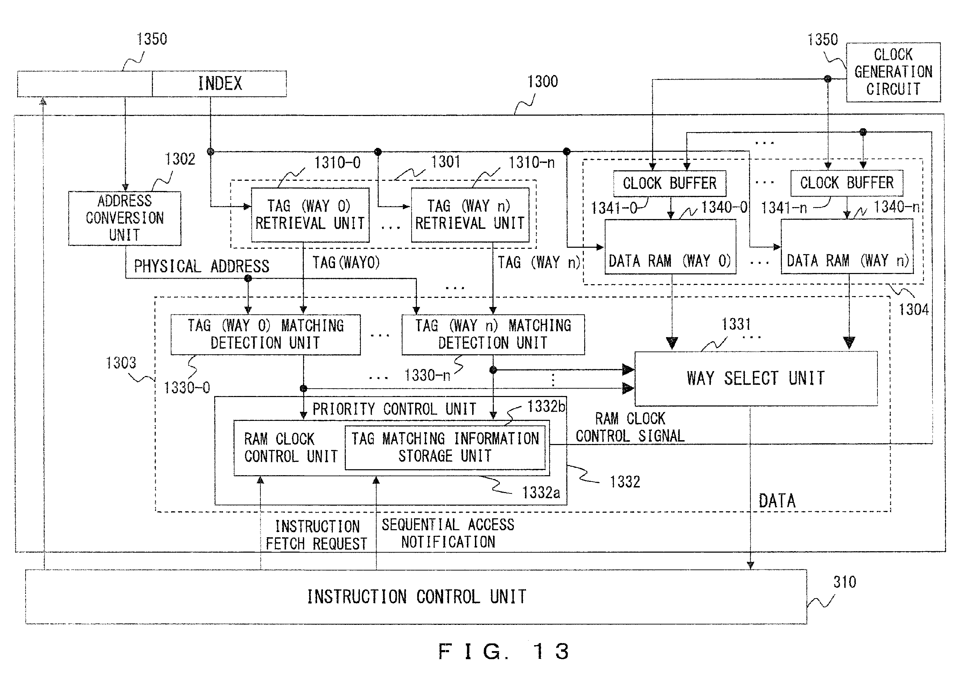

In the description above, the data RAM 334 has a 2-WAY configuration, but may have a configuration including more than 2 WAYs. FIG. 13 is an example of a configuration of an L1 cache unit when the data RAM 334 has an n-WAY configuration.

An L1 cache unit 1300 illustrated in FIG. 13 includes a TAG retrieval unit 1301, an address conversion unit 1302, a TAG matching unit 1303, and data RAM 1304. The TAG retrieval unit 1301, the address conversion unit 1302, the TAG matching unit 1303, and the data RAM 1304 respectively correspond to the TAG retrieval unit 331, the address conversion unit 332, the TAG matching unit 333, and the data RAM 334 illustrated in FIG. 3.

The TAG retrieval unit 1301 includes a TAG (WAY 0) retrieval unit 1310-0, a TAG (WAY 1) retrieval unit 1310-1, ..., and a TAG (WAY n) retrieval unit 1310-n.

The TAG matching unit 1303 includes a TAG (WAY 0) matching detection unit 1330-0, a TAG (WAY 1) matching detection unit 1330-1, ..., and a TAG (WAY n) matching detection unit 1330-n. The TAG matching unit 1303 further includes a WAY select unit 1331 and a priority control unit 1332. The priority control unit 1332 includes a RAM clock control unit 1332a and a TAG matching information storage unit 1332b.

The data RAM 1304 includes data RAM (WAY 0) 1340-0 of MAY 0, data RAM (WAY 1) 1340-1 of WAY 1, ..., and data RAM (WAY n) 1340-n of WAY n. Furthermore, the data RAM 1304 includes a clock buffer 1341-0, a clock buffer 1341-1, and a clock buffer 1341-n for each WAY.

With the configuration above, when the instruction control unit 310 starts executing a program instruction, it issues an instruction fetch request to the RAM clock control unit 1332a in the L1 cache unit 1300 as necessary. When an instruction fetch request is issued, the instruction control unit 310 outputs the instruction fetch request signal "1" to the RAM clock control unit 1332a. When no instruction fetch request is issued, the instruction control unit 310 outputs the instruction fetch request signal "0" to the RAM clock control unit 1332a.

Simultaneously, the instruction control unit 310 notifies the L1 cache unit 1300 of an instruction address 1350 at which a desired instruction is stored together with the instruction fetch request. The instruction address 1350 is output to the address conversion unit 1302. The index included in the instruction address 1350 is output to the TAG (WAY 0) retrieval unit 1310-0, the TAG (WAY 1) retrieval unit 1310-1, ..., and the TAG (WAY n) retrieval unit 1310-n. In addition, the index included in the instruction, address 1350 is also output to the data RAM (WAY 0) 1340-0, the data RAM (WAY 1) 1340-1, ..., and the data RAM (WAY n) 1340-n.

The instruction control unit 310 also determines whether or not the instruction fetch request output to the L1 cache unit 1300 refers to the sequential access, and notifies the RAM clock control unit 1332a in the L1 cache unit 1300 of the result of the determination.

Depending on the instruction fetch request from the instruction control unit 310, the TAG (WAY 0) retrieval unit 1310-0 retrieves the TAG matching the index included in the instruction address 1350 received together with the instruction fetch request from the index table about the data RAM (WAY 0) 1340-0. Then, the TAG (MAY 0) retrieval unit 1310-0 outputs the result of the retrieval to the TAG (WAY 0) matching detection unit 1330-0.

The TAG (WAY 1) retrieval unit 1310-1, the TAG (WAY 2) retrieval unit 1310-2, ..., and the TAG (WAY n) retrieval unit 1310-n operate like the TAG (WAY 0) retrieval unit 1310-0.

For example, at the instruction fetch request from the instruction control unit 310, the TAG (WAY n) retrieval unit 1310-n retrieves the TAG matching the index included in the instruction address 1350 received together with the instruction fetch request from the index table about the data RAM (WAY n) 1340-n. Then, the TAG (WAY n) retrieval unit 1310-n outputs the result of the retrieval to the TAG (MAY n) matching detection unit 1330-n. In this case, the TAG output by the TAG (WAY n) retrieval unit 1310-n is called a "TAG (WAY n)".

Upon receipt of the instruction fetch request from the instruction control unit 310, the address conversion unit 1302 refers to the TLB etc., and converts the instruction address 1350 into a physical address. Then, the address conversion unit 332 outputs the physical address to the TAG (WAY 0) matching detection unit 1330-0, the TAG (WAY 1) matching detection unit 1330-1, ..., and the TAG (WAY n) matching detection unit 1330-n.

The TAG (WAY 0) matching detection unit 1330-0 compares the TAG output by the TAG (WAY 0) retrieval unit 1310-0 with the physical address output by the address conversion unit 1302. Then, the TAG (WAY 0) matching detection unit 1330-0 outputs the result of the comparison to the WAY select unit 1331 and the RAM clock control unit 1332a.

When the TAG output by the TAG (WAY 0) retrieval unit 1310-0 matches the physical address output by the address conversion unit 1302, the TAG (WAY 0) matching detection unit 1330-0 outputs the TAG (WAY 0) matching signal "1" to the RAM clock control unit 1332a. If the TAG output by the TAG (WAY 0) retrieval unit 1310-0 does not match the physical address output by the address conversion unit 1302, then the TAG (WAY 0) matching detection unit 1330-0 outputs the TAG (WAY 0) matching signal "0" to the RAM clock control unit 1332a.

The TAG (WAY 1) matching detection unit 1330-1, the TAG (WAY 2) matching detection unit 1330-2, ..., and the TAG (MAY n) matching detection unit 1330-n operate like the TAG (WAY 0) matching detection unit 1330-0.

For example, the TAG (WAY n) matching detection unit 1330-n compares the TAG output by the TAG (WAY n) retrieval unit 1310-n with the physical address output by the address conversion unit 1302. The TAG (WAY n) matching detection unit 1330-n outputs the result of the comparison to the WAY select unit 1331 and the RAM clock control unit 1332a.

when the TAG output by the TAG (WAY n) retrieval unit 1310-n matches the physical address output by the address conversion unit 1302, the TAG (WAY n) matching detection unit 1330-n outputs the TAG (WAY n) matching signal "1" to the RAM clock control unit 1332a. When the TAG output by the TAG (WAY n) retrieval unit 1310-n does not match the physical address output by the address conversion unit 1302, the TAG (WAY n) matching detection unit 1330-n outputs the TAG (WAY n) matching signal "0" to the RAM clock control unit 1332a.

According to the TAG matching signal output by the TAG (WAY 0) matching detection unit 1330-0, ..., and the TAG (WAY n) matching detection unit 1330-n, the WAY select unit 1331 selects a WAY in the data RAM 1304. Then, the WAY select unit 1331 outputs data output from the data RAM of the selected WAY, that is, any of the data RAM (WAY 0) 1340-0, ..., and the data RAM (WAY n) 1340-n, to the instruction control unit 310 etc.

Upon receipt of an abort request from the RAM clock control unit 1332a, the priority control unit 1332 performs the aborting process. In addition to the performance of the aborting process, the priority control unit 1332 arbitrates the request by re-inputting the instruction fetch request from the instruction control unit 310, the instruction fetch request for which a cache miss occurred in the L1 cache unit 1300, etc.

The RAM clock control unit 1332a determine whether or not the instruction address requested by he instruction fetch request refers to the leading address of the cache line in the data RAM (WAY 0) 1340-0, ..., or the data RAM (WAY n) 1340-n.

If it is determined that the instruction address requested by the instruction fetch request does not refer to the leading address of the cache line, then the RAM clock control unit 1332a generates the cache line non-leading address signal "1". If it is determined that the instruction address requested by the instruction fetch request refers to the leading address of the cache line, then the RAM clock control unit 1332a generates the cache line non-leading address signal "0".

Then, the RAM clock control unit 1332a stores in the TAG matching information storage unit 1332b for each pipeline of the instruction fetch the instruction fetch request signal from the instruction control unit 310 and the sequential access notification signal.

Furthermore, the RAM clock control unit 1332a stores in the TAG matching information storage unit 1332b for each pipeline of the instruction fetch the cache line non-leading address signal generated by the RAM clock control unit 1332a.

In addition, the RAM clock control unit 1332a stores in the TAG matching information storage unit 1332b for each pipeline of the instruction fetch the TAG (WAY 0) matching signal from the TAG (WAY 0) matching detection unit 1330-0, ..., and the TAG (WAY n) matching signal from the TAG (WAY n) matching detection unit 1330-n.

The following table 2 illustrates the TAG matching information stored in the TAG matching information storage unit 1332b.

| | INSTRUCTION FETCH REQUEST | SEQUENTIAL ACCESS NOTIFICATION | CACHE LINE NON-LEADING ADDRESS | TAG MATCHING | | |
|---|---|---|---|---|---|---|
| | | | | WAY0 | ··· | WAYn |
| FIRST PIPELINE | a 1 | b 1 | c 1 | d 1 0 | ··· | d 1 n |
| SECOND PIPELINE | a 2 | b 2 | c 2 | d 2 0 | ··· | d 2 n |
| THIRD PIPELINE | a 3 | b 3 | c 3 | d 3 0 | ··· | d 3 n |

The RAM clock control unit 1332a determines according to the TAG matching information stored in the TAG matching information storage unit 1332b whether or not the instruction fetch being processed refers to the sequential access. If the instruction fetch being processed refers to the sequential access, the RAM clock control unit 1332a outputs a RAM clock control signal for control of the supply or stop of a clock to the clock buffers 1341-0, 1341-1, ..., and 1341-n.

The RAM clock control unit 1332a may include the function of monitoring the clock state of the data RAM (WAY 0) 1340-0, ..., and the data RAM (WAY n) 1340-n.

For example, the RAM clock control unit 1332a may include the function of issuing an abort request to the priority control unit 1332 when it is detected that the clock is stopped in the WAY in which the TAG matching is achieved in the data RAM 1304.

The data RAM 1304 has an n-WAY configuration, that is, includes the data RAM (WAY 0) 1340-0, the data RAM (WAY 1) 1340-1, ..., and the data RAM (WAY n) 1340-n. In the example illustrated in FIG. 13, it is assumed that the data RAM (WAY 0) 1340-0 is the WAY 0, the data RAM (WAY 1) 1340-1 is the WAY 1, ..., and the data RAM (WAY n) 1340-n is a WAY n.

The data RAM 13404 includes the clock buffers 1341-0, 1341-1, ..., and 1341-n.

The clock buffers 1341-0, 1341-1, ..., and 1341-n respectively control the supply and stop of a clock to the data RAM (WAY 0) 1340-0, the data RAM (WAY 1) 1340-1, ..., and the data RAM (WAY n) 1340-n.

The data RAM 1304 illustrated in FIG. 13 includes the clock buffers 1341-0, 1341-1, ..., and 1341-n in the data RAM 1304, but it is not limited to the configuration. It is obvious that the clock buffers 1341-0, 134-1, ..., and 1341-n may be arranged outside the data RAM 1304.

Each of the clock buffers 1341-0, 1341-1, ...... and 1341-n receives a clock from the clock generation circuit 1350. Each of the clock buffers 1341-0, 1341-1, ..., and 1341-n supplies a clock respectively to the data RAM (WAY 0) 1340-0, data RAM (WAY 1) 1340-1, ..., and data RAM (WAY n) 1340-n according to the RAM clock control signal.

For example, the clock buffer 1341-0 supplies a clock to the data RAM (WAY 0) 1340-0 while the RAM (WAY 0) clock control signal is "0". The clock buffer 1341-0 stops the supply of a clock to the inside of the data RAM (WAY 0) 1340-0 while the RAM (WAY 0) clock control signal is "1". The clock buffers 1341-1, 1341-2, ..., and clock buffer 1341-n operate similarly to the data RAM (WAY 0) 1340-0.

The clock generation circuit 1350 generates a clock of a predetermined cycle. The clock generation circuit 1350 outputs a generated clock to the clock buffers 1341-0, 1341-1, ..., and 1341-n.

The above-mentioned TAG (WAY 0) matching detection unit 1330-0, TAG (WAY 1) matching detection unit 1330-1, ..., and TAG (WAY n) matching detection unit 1330-n may be realized with a concrete configuration illustrated in FIG. 5.

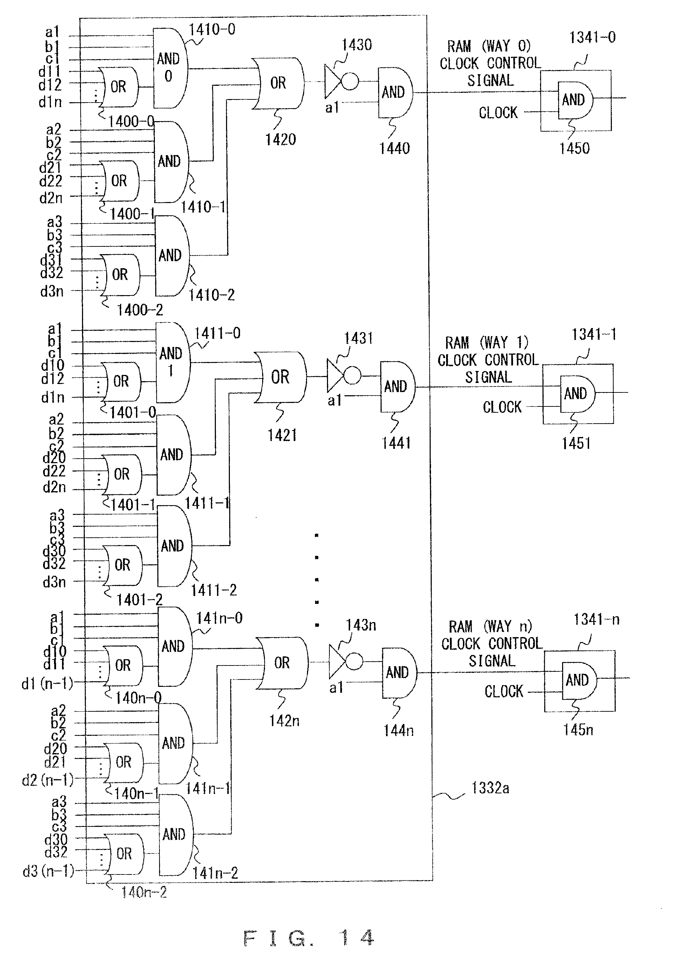

FIG. 14 is an example of a concrete configuration of the important portion of the RAM clock control unit 1332a.

The RAM clock control unit 1332a include logical sum circuits 1400-0, 1401-0, ..., and 140n-0, logical sum circuits 2400-1, 1401-1, ..., and 140n-1, and logical sum circuits 1400-2, 1401-2, ..., and 140n-2.

The RAM clock control unit 1332a include logical product circuits 1.410-0, 1411-0, ..., and 141n-0, logical product circuits 1410-1, 1411-1, ..., and 141n-1, and logical product circuits 1410-2, 1411-2, ..., and 141n-2.

The RAM clock control unit 1332a also includes logical sum circuits 1420, 1421, ..., and 142n. The RAM clock control unit 1332a includes inversion, circuits 1430, 1431, ..., and 143n. The RAM clock control unit 1332a also includes logical product circuits 1440, 1441, ..., and 144n.

In FIG. 14, "AND" is short for a logical product circuit, and "OR"' is short for a logical sum circuit.

The generation of a RAM (WAY n) clock control signal is described below.

When a RAM (WAY n) clock control signal is generated, the logical sum circuits 140n-0, 140n-1, and 140n-2, the logical product circuits 141n-0, 141n-1, and 141n-2, the logical sum circuit 142n, the inversion circuit 143n, and the logical product circuit 144n are used.

The output terminal of the logical sum circuit 140n-0 is connected to the logical product circuit 141n-0. Similarly, the output terminal of the logical sum circuit 140n-1 is connected to the logical product circuit 141n-1, and the output terminal of the logical sum circuit 140n-2 is connected to the logical product circuit 141n-2.

The output terminals of the logical product circuits 141n-0, 141n-1, and 141n-2 are connected to the input terminal of the logical sum circuit 142n. The output terminal of the logical sum circuit 142n is connected to the input terminal of the inversion circuit 143n. The output terminal of the inversion circuit 143n is connected to the input terminal of the logical product circuit 144n. The input terminal of the logical product circuit 144n is connected also to the output terminal of the instruction control unit 310 in addition to the output terminal of the inversion circuit 143n, and receives an instruction fetch request signal. The output terminal of the logical product circuit 144n is connected to the clock buffer 1341-n described later, that is, to the input terminal of a logical product circuit 145n.

With the configuration above, TAG matching about the first pipeline in the TAG matching information stored in the TAG matching information storage unit 1332b other than the TAG (WAY n) matching is input to the logical sum circuit 140n-0. For example, the TAG (WAY 0) matching d10, ..., and the TAG (WAY(n-1)) matching d1 (n-1) other than the TAG (WAY n) matching d1n illustrated in table 2 is input to the logical sum circuit 140n-0.

Then, the outputs "1" when the TAG (WAY 0) matching d10, ..., or the TAG (WAY (n-1)) matching d1 (n-1) is "1", that is, when TAG matching is detected in the WAY other than the WAYn in the first pipeline. The logical sum circuit 140n-0 outputs "0" when all of the TAG (WAY 0) matching d10, ..., and the TAG (WAY(n-1)) matching d1 (n-1) are "0", that is, when no TAG matching other than the WAYn is detected in the first pipeline.

The instruction fetch request a1, the sequential access notification b1, and the cache line non-leading address c1 about the first pipeline in the TAG matching information stored in the TAG matching information storage unit 1332b are input to the logical product circuit 141n-0. Furthermore, the output of the logical sum circuit 140n-0 is input to the logical product circuit 141n-0.

Then, the logical product circuit 141n-0 outputs "1" when the instruction fetch request a1, the sequential access notification b1, the cache line non-leading address c1, and the output of the logical sum circuit 140n-0 are all "1".

For example, when the instruction fetch in the first pipeline refers to the sequential access to the same cache line in the WAY other than the WAYn, the logical product circuit 141n-0 outputs "1"

The logical product circuit 141n-0 outputs "0" when at least one of the instruction fetch request a1, the sequential access notification b1, the cache line non-leading address c1, or the output of the logical sum circuit 140n-0 is "0".

For example, when the instruction fetch request a1 is "1", and the sequential access notification b1 is "0", that is, when the instruction fetch request in the first pipeline does not refer to the sequential access, the logical product circuit 141n-0 outputs "0". Additionally, when the output of the logical sum circuit 140n-0 is "0", that is, when no TAG matching is detected in the WAY other than the WAYn in the first pipeline, the logical product circuit 141n-0 outputs "0".

TAG matching about the second pipeline in the TAG matching information stored in the TAG matching information storage unit 1332b other than the TAG (WAY n) matching is input to the logical sum circuit 140n-1. For example, the TAG (WAY 0) matching d20, ..., and the TAG (WAY (n-1)) matching d2 (n-1) other than the TAG (WAY n) matching d2n illustrated in table 2 is input to the logical sum circuit 140n-1.

Then, the logical sum circuit 140n-1 outputs "1" when the TAG (WAY 0) matching d20, ..., or the TAG (WAY(n-1)) matching d2 (n-1) is "1", that is, when TAG matching is detected in the WAY other than the WAYn in the second pipeline. The logical sum circuit 140n-1 outputs "0" when all of the TAG (WAY 0) matching d20, ..., and the TAG (WAY (n-1)) matching d2 (n-1) are "0", that is, when no TAG matching other than the WAYn is detected in the second pipeline.

The instruction fetch request a2, the sequential access notification b2, and the cache line non-leading address c2 about the second pipeline in the TAG matching information stored in the TAG matching information storage unit 1332b are input to the logical product circuit 141n-1. Furthermore, the output of the logical sum circuit 140n-1 is input to the logical product circuit 141n-1.

Then, the logical product circuit 141n-1 outputs "1" when the instruction fetch request a2, the sequential access notification b2, the cache line non-leading address c2, and the output of the logical sum circuit 140n-1 are all "1".

For example, when the instruction fetch in the second pipeline refers to the sequential access to the same cache line in the MAY other than the WAYn, the logical product circuit 141n-1 outputs "1"

The logical product circuit 141n-1 outputs "0" when at least one of the instruction fetch request a2, the sequential access notification b2, the cache line non-leading address c2, or the output of the logical sum circuit 140n-1 is "0". For example, when the instruction fetch request a2 is "1", and the sequential access notification b2 is "0", that is, when the instruction fetch request in the second pipeline does not refer to the sequential access, the logical product circuit 141n-1 outputs "0". Additionally, when the output of the logical sum circuit 140n-1 is "0", that is, when no TAG matching is detected in the WAY other than the WAYn in the second pipeline, the logical product circuit 141n-1 outputs "0".

TAG matching about the third pipeline in the TAG matching information stored in the TAG matching information storage unit 1332b other than the TAG (WAY n) matching is input to the logical sum circuit 140n-2. For example, the TAG (WAY 0) matching d30, ..., and the TAG (WAY (n-1)) matching d3 (n-1) other than the TAG (WAY n) matching d3n illustrated in table 2 is input to the logical sum circuit 140n-2.

Then, the logical sum circuit 140n-2 outputs "1" when the TAG (WAY 0) matching d30, ..., or the TAG (WAY(n-1)) matching d3(n-1) is "1", that is, when TAG matching is detected in the WAY other than the WAYn in the third pipeline. The logical sum circuit 140n-2 outputs "0" when all of the TAG (WAY 0) matching d30, ..., and the TAG (WAY (n-1)) matching d3 (n-1) are "0", that is, when no TAG matching other than the WAYn is detected in the third pipeline.

The instruction fetch request a3, the sequential access notification b3, and the cache line non-leading address c3 about the third pipeline in the TAG matching information stored in the TAG matching information storage unit 1332b are input to the logical product circuit 141n-2. Furthermore, the output of the logical sum circuit 140n-2 is input to the logical product circuit 141n-2.

Then, the logical product circuit 141n-2 outputs "1" when the instruction fetch request a3, the sequential access notification b3, the cache line non-leading address c3, and the output of the logical sum circuit 140n-2 are all "1".

For example, when the instruction fetch in the third pipeline refers to the sequential access to the same cache line in the WAY other than the WAYn, the logical product circuit 141n-2 outputs "1"

The logical product circuit 141n-2 outputs "0" when at least one of the instruction fetch request a3, the sequential access notification b3, the cache line non-leading address c3, or the output of the logical sum circuit 140n-2 is "0" .

For example, when the instruction fetch request a3 is "1", and the sequential access notification b3 is "0", that is, when the instruction fetch request in the third pipeline does not refer to the sequential access, the logical product circuit 141n-2 outputs "0". Additionally, when the output of the logical sum circuit 140n-2 is "0", that is, when no TAG matching is detected in the WAY other than the WAYn in the third pipeline, the logical product circuit 141n-2 outputs "0".

The logical sum circuit 142n outputs "1" when at least one of the output of the logical product circuits 141n-0, 141n-1, and 141n-2 is "1". If at least one instruction fetch in the first through third pipelines refers to the sequential access to the same cache line in the WAY other than the WAYn, the logical sum circuit 142n outputs "1".

The logical sum circuit 142n outputs "0" when all of the logical product circuits 141n-0, 141n-1, and 141n-2 output "0". For example, the logical sum circuit 142n outputs "0" when no instruction fetch is executed to perform the sequential access to the same cache line in the way other than the WAYn in any of the first through third pipelines.

The inversion circuit 143n inverts the signal output by the logical sum circuit 142n, and outputs the inverted signal to the logical product circuit 144n. When the logical sum circuit 142n outputs "0", the inversion circuit 143n outputs "1" to the logical product circuit 144n. If the logical sum circuit 142n outputs "1", the inversion circuit 143n outputs "0" to the logical product circuit 144n.

The logical product circuit 144n outputs the logical product of the signal output by the inversion circuit 143n and the instruction fetch request a1 as a RAM (WAY n) clock control signal to the clock buffer 1341-n.

That is, the logical product circuit 144n outputs the RAM (WAY n) clock control signal "0" when at least one instruction fetch refers to the sequential access to the same cache line in the WAY other than the WAYn in the first through third pipelines.

The logical product circuit 144n outputs the RAM (WAY n) clock control signal "1" when the instruction fetch for performing the sequential access to the same cache line in the WAY other than the WAYn is not executed in the first through third pipelines.

The concrete processes of the instruction control unit 310 and the L1. cache unit 1300 are described above with reference to FIGS. 7 through 9. However, steps S904 through S907 in FIG. 9 require the following operations. In this case, it is not necessary to perform the processes in steps S908 through S909.

In step S904, the RAM clock control unit 1332a determines according to the acquired TAG matching information the WAY in which TAG matching is achieved.

In step S905, the RAM clock control unit 1332a determines whether or not a clock is supplied to the WAY determined in step S904 that the TAG matching is achieved in the WAY.

If a clock is supplied (YES in step S905), then the RAM clock control unit 1332a passes control to step S906. In this case, the RAM clock control unit 1332a outputs the RAM clock control signal for stopping a clock to the WAY other than the WAY determined in step S904 that the TAG matching is achieved in the WAY (step S906).

If a clock is stopped (NO in step S905), the RAM clock control unit 1332a passes control to step S907. In this case, the RAM clock control unit 1332a notifies the priority control unit 1332 of an abort request (step S907).

With the configuration of the processor 300 described above, for example, the data RAM 404, the data RAM 1304, etc. may be an example of a "storage unit".

The data RAM (WAY 0) 440-0 and the data RAM (WAY 1) 440-1, the data RAM (WAY 0) 1340-0, ..., and data RAM (WAY n) 1340-n may be an example of a "individual storage unit".

The units including the TAG retrieval unit 401, the address conversion unit 402, and the TAG matching unit 403, and the units including the TAG retrieval unit 1301, the address conversion unit 1302, and the TAG matching unit 1303, etc. may be an example of the "individual storage unit designation unit".

The WAY selection unit 431 and a WAY selection unit 1331, etc. may be an example of the "data output unit".

The clock buffer 441-0, the clock buffer 441-1, the clock buffers 1341-0, 1341-1, ..., and 1341-n, etc. may be an example of the "clock supply unit".

The RAM clock control unit 432a, the RAM clock control unit 1332a, etc. may be an example of the "clock control unit".

With the above-mentioned configuration, the RAM clock control unit 432a (RAM clock control unit 1332a) outputs a RAM clock control signal for stopping a clock to the WAYs other than the first WAY in which TAG matching is detected if the sequential access is detected.

As a result, while the sequential access is being performed to the L1 cache unit 330, a clock is stopped to the WAYs other than the first WAY, thereby suppressing the wasteful operation of the data RAM 404 (data RAM 1304). Then, the power consumption of the data RAM 404 (data RAM 1304) maybe reduced. In addition, the power consumption of the L1 cache unit 400 (L1 cache unit 1300) may also be reduced.

The RAM clock control unit 432a (RAM clock control unit 1332a) monitors the clock state of the WAYs included in the data RAM 404 (data RAM 1304). Then, it detects that the clock of the first WAY indicated by the TAG matching information is stopped. The RAM clock control unit 432a (RAM clock control unit 1332a) issues an abort request to the priority control unit 432 (priority control unit 1332). Then, the priority control unit 432 (priority control unit 1332) stops the process being executed, and the process is resumed from the state in which a program instruction is correctly completed.

As a result, the L1 cache unit 400 (L1 cache unit 1300) may allow the processor 300 to correctly perform an arithmetic operation although the clock of the first WAY indicated by the TAG matching information is stopped due to any fault.

As described above, the disclosed cache memory control device may suppress wasteful operations of instruction data RAM, thereby realizing low power consumption.

The procedure of the processes according to the flowcharts in FIGS. 8 and 9 does not limit the order of the processes. Therefore, it is obvious that the order of the processes may be changed if possible.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Althouth the embodiments of the present inventions have been described in detail, it should be understood that the various changes, substitutions, and alterations coule be made hereto without departing from the spirit and scope of the invention.

## Claims

1. A cache memory control device for controlling a storage device that stores data at a request of an instruction control unit for executing an instruction on the data, the cache memory control device comprising:
a cache memory designation unit (401-403, 1301-1303) that designates a first cache memory storing first data requested by the instruction control unit in a plurality of cache memories included in a storage unit holding the data and a clock is separately provided, respectively;
a data output unit (431, 1331) that reads the first data from the first cache memory designated by the cache memory designation unit, and outputs the first data; and
a clock control unit (432a, 1332a) that controls a clock supply unit among a plurality of clock supply units for supplying clocks to the plurality of cache memories to disable supplying of a clock to cache memories other than the first cache memory when the instruction control unit requests second data stored continuously with the first data in the first cache memory.

2. The cache memory control device according to claim 1, wherein
the clock control unit requests to stop a process being performed and resume execution of a program instruction from a state in which the program instruction is correctly completed when it is detected that the first cache memory designated by the cache memory designation unit is in a state in which the supply of a clock is stopped.

3. The cache memory control device according to claim 1, wherein
the clock control unit controls the clock supply unit to disable the supplying of the clock to the first cache memory designated by the cache memory designation unit while the instruction control unit requests the second data stored continuously with the first data.

4. The cache memory control device according to claim 1, wherein
the clock control unit controls the clock supply unit to supply the clock to all cache memories of the storage unit when the instruction control unit requests data other than the second data stored continuously with the first data.

5. The device according to claim 1, wherein
the clock control unit determines that the instruction control unit requests the second data stored continuously with the first data when the instruction control unit makes a branch prediction using an address indicated by a program counter and predicts that the instruction does not branch.

6. A cache memory device that stores data at a request of an instruction control unit for executing an instruction on the data, the cache memory device comprising:
a storage unit (440-0, 440-1, 1340-0,..., 1340-n) includes cache memories that hold data and a clock is separately provided, respectively;
an cache memory designation unit (401-403, 1301-1303) that designates a first cache memory storing first data requested by the instruction control unit among the plurality of cache memories in the storage unit;
a data output unit (431, 1331) that reads the first data from the first cache memory designated by the cache memory designation unit, and outputs the first data; and
a clock control unit (432a, 1332a) that controls a clock supply unit among the plurality of clock supply units for supplying clocks to the plurality of cache memories to disable supplying of a clock to cache memories other than the first cache memory when the instruction control unit requests second data stored continuously with the first data in the first cache memory.

7. The cache memory device according to claim 6, wherein
the clock control unit requests to stop a process being performed and resume execution of a program instruction from a state in which the program instruction is correctly completed when it is detected that the first cache memory designated by the cache memory designation unit is in a state in which the supply of a clock is stopped.

8. The cache memory device according to claim 6, wherein
the clock control unit controls the clock supply unit to disable the supplying of the clock to the first cache memory designated by the cache memory designation unit while the instruction control unit requests the second data stored continuously with the first data.

9. The device according to claim 6, wherein
the clock control unit controls the clock supply unit to supply the clock to all cache memories of the storage unit when the instruction control unit requests data other than the second data stored continuously with the first data.

10. The device according to claim 6, wherein
the clock control unit determines that the instruction control unit requests the second data stored continuously with the first data when the instruction control unit makes a branch prediction using an address indicated by a program counter and predicts that the instruction does not branch.

11. A control method for controlling a storage device that stores data at a request of an instruction control unit for executing an instruction on the data, the control method comprising:
designating (401-403, 1301-1303) a first cache memory storing first data requested by the instruction control unit in a plurality of cache memories included in a storage unit holding the data and a clock is separately provided, respectively;
reading (431, 1331) the first data from the designated first cache memory; and
controlling (432a, 1332a) a clock supply unit to disable supplying of a clock to cache memories other than the first cache memory in a plurality of clock supply units for supplying clocks to the plurality of cache memories when the instruction control unit requests second data stored continuously with the first data in the first cache memory.

12. A processor, comprising:
an instruction control unit (310) that executes an instruction on data;
a storage unit (440-0, 440-1,1340-0,..., 1340-n) that holds the data and includes a plurality of cache memories and a clock is separately provided, respectively;
each of a plurality of clock supply units (441-0, 441-1, 1341-0,..., 1341-n) that supplies a clock to each of the plurality of cache memories, respectively;
an cache memory designation unit (401-403, 1301-1303) that designates a first cache memory storing first data requested by the instruction control unit in the plurality of cache memories provided for the storage unit;
a data output unit (431, 1331) that reads the first data from the first cache memory designated by the cache memory designation unit, and outputs the first data; and
a clock control unit (432a, 1332a) that controls a clock supply unit to disable supplying of a clock to cache memories other than the first cache memory in the plurality of clock supply units when the instruction control unit requests second data stored continuously with the first data in the first cache memory.
